# EUROPEAN PATENT SPECIFICATION

(11) **EP 0 810 239 B1**
(45) Date of publication and mention of the grant of the patent: **20.09.2000**
(21) Application number: 97109890.0
(22) Date of filing: 06.07.1992
(51) Int. Cl.: C08F 246/00, C08F 220/22, C09D 157/00, C08F 230/02

(54) **Polymeric surface coatings**
Polymere Oberflächenbeschichtungszusammensetzungen
Revêtements polymères de surfaces

(30) Priority: 05.07.1991 GB 9114619; 24.04.1992 GB 9208970
(43) Date of publication of application: 03.12.1997
(62) Divisional of application: 92914110.9
(73) Proprietor: BIOCOMPATIBLES LIMITED, Farnham, Surrey GU9 8QL (GB)
(72) Inventor: Bowers, Roderick W.J., Norfolk, Virginia 23507 (US); Jones, Stephen Alister, Biocompatibles Limited, Weydon Lane, Farnham, Surrey, GU9 8QL (GB); Stratford, Peter William, Biocompatibles Limited, Weydon Lane, Farnham, Surrey, GU9 8QL (GB)
(74) Representative: Jones, Helen Marjorie Meredith

(56) References cited:
- EP-A- 0 293 963
- EP-A- 0 593 561
- EP-A- 0 818 479
- EP-A- 0 861 858
- DE-A- 2 640 967
- US-A- 3 671 502

## Description

The present invention relates to polymers, processes for producing them and processes for coating surfaces with them. The polymers are useful for coating surfaces of devices and materials which come into contact with protein-containing solutions and biological fluids, and rendering the surfaces bio- and haemocompatible. Surfaces may thus be rendered suitable for prolonged contact with living tissues and body fluids and with protein-containing solutions.

Materials used in the manufacture of separation substrates and devices, blood contacting devices, contact and intraocular lenses, and other devices which are used in contact with protein-containing or biological fluids must be selected on the basis of acceptable physical and mechanical properties and compatibility with the protein-containing or biological fluid. For any given application of these materials it is usually difficult to optimise all of these considerations simultaneously and a compromise must be reached often resulting in less than optimal performance. For example, major biological problems are often encountered with materials which have otherwise optimal mechanical and physical properties. These problems often manifest themselves as undesirable deposition of biological components and in particular proteinaceous material. This protein adsorption results in blood clot formation in blood-contacting materials, the adsorption of tear components onto contact lenses resulting in deposit formation, formation of deposits on intraocular lenses and in separation media it results in blockage and failure of separation devices. Such effects lead to significant loss in operational performance and often complete rejection and failure of devices.

In the case of medical devices, for example prostheses and components of blood dialysis equipment, it is common practice to employ biocompatible polymers to form at least the surface of the devices to discourage protein adsorption. However, these materials are not perfect and reaction with the living tissues still remains a problem; for example surface-induced thrombosis is still a major difficulty, particularly where large quantities of blood are contacted with a foreign surface such as in artificial lungs and kidneys. Formation of a clot in an artificial organ has a number of adverse or even catastrophic effects including occlusion of the blood pathway in the extracorporeal system, or embolism if the clot breaks off the artificial surface and lodges in a host blood vessel. Dialysis membranes, heart valves, circulator-assist devices, blood substitutes and artificial lungs all share this problem.

It is known that materials for use as biocompatible coatings should ideally:
(a) be capable of reproducible manufacture as pure materials;
(b) be capable of being coated onto surfaces without being degraded or adversely changed;
(c) have the requisite mechanical and permeability properties required for the specific function of the device for which they are intended;
(d) be sterilisable without adverse changes in, for example, permeability and mechanical or surface properties;
(e) not be damaged or degraded by the biological environment;
(f) not be carcinogenic.

In applications involving direct contact with blood further restrictions exist. Materials should not:
(g) induce significant platelet adhesion;
(h) interfere with the normal clotting mechanism; or
(i) cause any significant damage to the cellular elements or soluble components of the blood.

There have been many attempts to prepare biocompatible, and specifically blood compatible (i.e. haemocompatible), surfaces, which do not activate the blood coagulation process and do not promote thrombus formation. Examples of such attempts include the preparation of negatively charged surfaces, such as by use of anionic polymers or suitable oriented electret polymers, preparation of surfaces coated with the natural anticoagulant heparin or synthetic heparin analogues, preparation of surfaces with inherently low surface free energy such as by use of silicone rubber, preparation of albumin-coated surfaces, and preparation of surfaces coated with compounds which are thought to adsorb albumin preferentially from blood. All of these however have had limitations.

In JP-A-03-039309 copolymers of a zwitterionic monomer, 2-(methacryloyloxyethyl)-2'-(trimethylammonium)ethyl phosphate inner salt, and alkyl methacrylates are used to form membranes and to mould to form medical materials. There is a suggestion that the polymers could be dissolved in a solvent and used to modify surfaces of materials.

In US-A-3671502 copolymers of a zwitterionic monomer, which is a sulphobetaine or a carboxybetaine, and a hydroxyalkyl methacrylate comonomer are used as binders for hydrophilic substrates. The polymers are neutral (i.e. uncharged).

In GB-A-1529378 which corresponds to DE-A-26 40 967, cross-linkable copolymers are formed by copolymerising a zwitterionic monomer, which is a sulphobetaine or a carboxybetaine compound, and a comonomer having a reactive group such as an epoxy group. The polymers are used in thermosetting paints.

In EP-A-293963 copolymers of fluoroalkyl group containing monomers and ionic monomers are produced. The ionic groups provide cross-linking with counterionically charged groups in the polymer or at a surface. The product may be used in a wound dressing.

We have now devised film-forming polymers which can be used to coat surfaces. It has been found that these copolymers may be used to provide stable coatings on a wide variety of surfaces including, polyethylene, PVC, steel and poly(imide).

The polymers which contain zwitterionic groups, mimic the zwitterionic structure of phospholipids such as phosphatidylcholine and sphingomyelin which are the major components of the outer membrane of all living cells. In this way the present invention seeks to provide a biocompatible surface on a coated substrate at which the deposition of proteins and cells at the substrate is minimised when the coated substrate comes into contact with a protein-containing solution or biological fluid.

In addition a variety of ligands may be attached to the polymers of the present invention when coated onto a substrate. Alternatively ligands may be attached to the polymers prior to coating on a substrate, e.g. when the polymer is in solution. The polymers of the present invention may therefore provide a means of attachment of such ligands. The term ligand includes, specific binding agents such as immunoglobulins and associated fragments thereof such as those useful for affinity separation and diagnostic applications, photosensitive and chemisensitive moieties such as those useful for detector and sensor applications and therapeutic agents useful for clinical applications. Other ligands include peptide fragments which may be chemically linked to a polymer of the invention, such as fragments which induce cell attachment and may therefore be used to allow the polymers of the present invention to provide cell seeding.

The present invention provides polymer obtainable by the polymerisation of radical polymerisable monomers containing:
a) a zwitterionic monomer having the general formula I:

   Y-B-X (I)

   wherein
   B is a straight or branched alkylene, oxaalkylene or oligo-oxaalkylene chain optionally containing one or more fluorine atoms up to and including perfluorinated chains, or if X contains a carbon-carbon chain between B and the zwitterion or if Y contains a terminal carbon atom bonded to B, a valence bond;
   X is a zwitterionic group and
   Y is an ethylenically unsaturated polymerizable group selected from 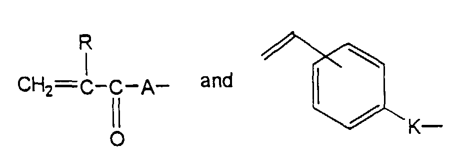 wherein:
      R is hydrogen or a C₁-C₄ alkyl group;
      A is -O- or -NR¹- where R¹ is hydrogen or a C₁-C₄ alkyl group or R¹ is -B-X where B and X are as defined above; and
      K is selected from the group consisting of-(CH₂)ₚNR²C(O)-, -(CH₂)ₚC(O)O-, -(CH₂)ₚNR²-, -(CH₂)ₚC(O)NR²-, -(CH₂)ₚNR²C(O)O-, -(CH₂)ₚOC(O)NR²-, -(CH₂)ₚNR²C(O)NR²-, in which the groups R² are the same or different) -(CH₂)ₚO-, -(CH₂)ₚSO₃-, and, optionally in combination with B, a valence bond and p is from 1 to 12 and R² is hydrogen or a C₁-C₄ alkyl group and
b) an ionic comonomer having the general formula (XII)

   Y²-B⁹-Q⁵ (XII)

   where Y² is an ethylenically unsaturated polymerizable group selected from 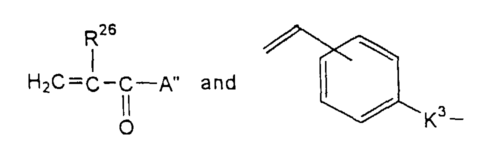 where
   R²⁶ is hydrogen or C₁-C₄ alkyl;
   A" is -O- or NR²⁷, wherein R²⁷ is hydrogen or a C₁-C₄ alkyl group or R²⁷ is a group -B⁹Q⁵;
   B⁹ is a valence bond, a straight or branched alkylene, oxaalkylene or oligo-oxaalkylene group;
   K³ is a group -(CH₂)ₓOC(O)-, -(CH₂)ₓC(O)O-, -(CH₂)ₓNR²⁸-, -(CH₂)ₓNR²⁸C(O)-, -(CH₂)ₓ(O)NR²⁸-, -(CH₂)ₓNR²⁸C(O)O-, -(CH₂)ₓOC(O)NR²⁸-, -(CH₂)ₓNR²⁸C(O)NR²⁸- (in which the groups R²⁸ are the same or different), -(CH₂)ₓO-, - (CH₂)ₓSO₃-, a valence bond, x is from 1 to 12 and R²⁸ is hydrogen or a C₁-C₄ alkyl group; and
   Q⁵ is an ionic group.

The coatings bind to surfaces with good adhesion and are not removable in the environment in which the coated surfaces are used, e.g. in use as a coating on a blood-contacting surface.

The zwitterionic groups mimic the structure of the head groups of phospholipids in cells. Without wishing to be limited by this theory, it is thought that the presence of such groups at a surface renders the surface more biocompatible.

In our copending application no. 92914110.9 (EP0593561), from which the present application is a divisional, polymers are obtainable by the polymerisation of a zwitterionic monomer as defined above, and a monomer having a reactive group suitable for providing covalent bonding to a substrate, or for rendering the polymer cross-linkable, and processes for producing the polymers and for their use are disclosed.

In our copending application no. 97109889.2 (EP0810239), also divided from 92914110.9 (EP0593561) polymers are obtainable by the polymerisation of zwitterionic monomer as defined above, and hydrophobic fluoroalkyl- or silyl- group containing monomers, and processes for producing and using the polymers are disclosed.

In our copending application no. 98108152.4 (EP 0861858), also divided from 92914110.9 (EP0593561), coating compositions and processes in which copolymers of zwitterionic monomer as defined above and higher alkyl(meth)acrylate are coated onto substrates as disclosed.

The extent to which a polymer renders a surface biocompatible may be assessed as a combination of factors such as reduction in the extent to which the surface causes blood platelet activation, protein adsorption, (for instance as judged by absorption of fibrinogen from human plasma) and reaction with C-reactive protein which is caused by the presence on the surface of isolated zwitterionic, e.g. phosphate ammonium ester groups. Preferably the polymers of the invention when coated onto a substrate, provide a reduction in platelet activation of at least 70%, more preferably at least 90%, as assessed by the assay described hereinafter compared to an untreated substrate. It is also preferred that the polymers of the invention, when coated onto a substrate, provide a reduction in fibrinogen absorption of at least 60% as assessed by the assay described hereinafter and a protein index of less than 1.5 x 10³ compared to an untreated substrate. The protein index is defined as the ratio of the absorbance due to C-reactive protein measured in the assay described hereinafter to the reduction in fibrinogen adsorption.

The groups bearing ionic charge may be used to bind the polymer to a charged surface by ionic interactions.

Optionally, the polymers also comprise residues of one or more diluent and/or crosslinkable monomers.

The invention also provides a process for producing such a polymer which comprises polymerising such monomers and a process for coating a surface with such a polymer, for instance a process comprising the steps of (a) polymerising such monomers to form the polymer and (b) coating the surface with the polymer so formed.

Optionally, the process further comprises attaching a ligand to the polymer either in solution before coating the surface, or, more preferably when coated on the surface.

In a specific embodiment the invention further provides such polymers containing residues of a crosslinkable monomer, which are uncrosslinked, when either coated on a surface or not coated on a surface and such polymers which are crosslinked when coated on a surface. The invention further provides a process of

crosslinking such polymers when coated on a surface. Monomers and comonomers which may be used in the polymers of the invention will now be described in more detail.

It is to be understood that throughout the specification (alk)acrylate, (alk)acrylic and (alk)acrylamide mean acrylate or alkacrylate, acrylic or alkacrylic and acrylamide or alkacrylamide respectively. Preferably unless otherwise stated alkacrylate, alkacrylic and alkacrylamide groups contain from 1 to 4 carbon atoms in the alkyl group thereof and are most preferably methacrylate, methacrylic or methacrylamide groups. Similarly (meth)acrylate, (meth)acrylic and (meth)acrylamide shall be understood to mean acrylate or methacrylate, acrylic or methacrylic and acrylamide or methacrylamide respectively.

### Zwitterionic Monomers

The monomer (or comonomer) bearing the zwitterionic group includes within its structure not only a centre of permanent positive charge but also a centre of negative charge. Typically the centre of permanent positive charge is provided by a quaternary nitrogen atom.

The comonomers which bear a zwitterionic group are of general formula (I) as defined above.

The proviso on whether B may be a valence bond ensures that the zwitterionic group in X is not directly bonded to a heteroatom, such as an oxygen or nitrogen atom in Y.

The zwitterionic monomers are therefore of general formula (II) or (III). 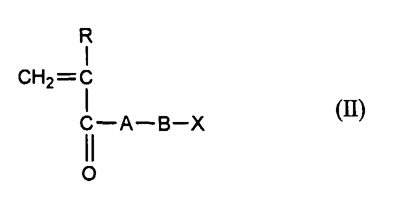 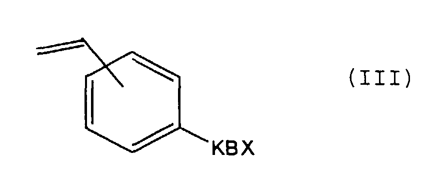 where R, A, B, K and X are as defined with reference to formula (I).

Preferably in the compounds of formula (II) R is hydrogen, methyl, or ethyl, more preferably methyl, so that (II) is an acrylic acid, methacrylic acid or ethacrylic acid derivative.

In the compounds of formula (III) K may be a valence bond and B a group, K may be a group and B a valence bond, both K and B may be groups, or K and B may together be a valence bond. Preferably B is a group where K is a valence bond.

Where K is a group then preferably p is from 1 to 6, more preferably 1,2 or 3 and most preferably p is 1. When K is a group -(CH₂)ₚNR²-, -(CH₂)ₚNR²C(O)-, (CH₂)ₚC(O)NR², -(CH₂)ₚNR²C(O)O-, -(CH₂)ₚOC(O)NR²- or -(CH₂)ₚNR²C(O)NR²- then R² is preferably hydrogen, methyl or ethyl, more preferably hydrogen.

In the compounds of formula (III) preferably the vinyl group is para to the group -K-B-X.

Preferably B is:
an alkylene group of formula -(CR³₂)ₐ-, wherein the groups -(CR³₂)ₐ- are the same or different, and in each group -(CR³₂)ₐ- the groups R³ are the same or different and each group R³ is hydrogen, fluorine or C₁₋₄ alkyl or fluoroalkyl, preferably hydrogen, and a is from 1 to 12, preferably 1 to 6;
an oxaalkylene group such as alkoxyalkyl having 1 to 6 carbon atoms in each alkyl moiety, more preferably -CH₂O(CH₂)₄-; or
an oligo-oxaalkylene group of formula -[(CR⁴₂)_{b}O]_{c}(CR⁴₂)_{b}- where the groups -(CR⁴₂)- are the same or different and in each group -(CR⁴₂)- the groups R⁴ are the same or different and each group R⁴ is hydrogen, fluorine or C₁₋₄ alkyl or fluoroalkyl, preferably hydrogen, and b is from 1 to 6, preferably 2 or 3 and c is from 2 to 11, preferably 2 to 5; or
if X contains a carbon-carbon chain between B and the zwitterionic group or if Y contains a terminal carbon atom, a valence bond.

Preferred groups B include alkylene, oxaalkylene and oligo-oxaalkylene groups of up to 12 carbon atoms optionally containing one or more but preferably no, fluorine atoms.

In compounds of formula (III) it is preferred that K and B contain up to 12 carbon atoms in total.

Preferred groups X are the groups of formula (IVB), (IVC), (IVD), (IVE) and (IVF) as defined below. Of these groups of formula (IVC) are particularly preferred.

The groups of formula (IVB) are: 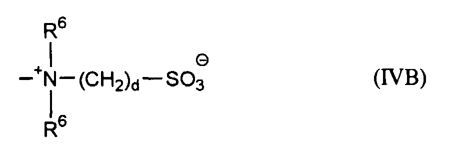 where the groups R⁶ are the same or different and each is hydrogen or C₁₋₄ alkyl and d is from 2 to 4.

Preferably the groups R⁶ are the same. It is also preferable that at least one of the groups R⁶ is methyl, and more preferable that the groups R⁶ are both methyl.

Preferably d is 2 or 3, more preferably 3.

When X is a group of formula (IVB) preferably B is a group of formula -(CR³₂)- or -(CR³₂)₂ eg. -(CH₂)- or -(CH₂CH₂)-.

The groups of formula (IVC) are: 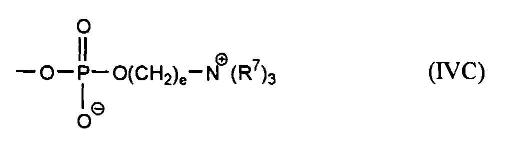 where the groups R⁷ are the same or different and each is hydrogen or C₁₋₄ alkyl, and e is from 1 to 4.

Preferably the groups R⁷ are the same. It is also preferable that at least one of the groups R⁷ is methyl, and more preferable that the groups R⁷ are all methyl.

Preferably e is 2 or 3, more preferably 2.

When X is a group of formula (IVC) preferably B is a group of formula -(CR³₂)- or -(CR³₂)₂-, eg. -(CH₂)- or -(CH₂CH₂)-.

The groups of formula (IVD) are: 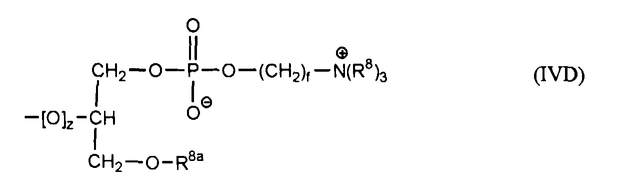 wherein the groups R⁸ are the same or different and each is hydrogen or C₁₋₄ alkyl, R⁸- is hydrogen or, more preferably, a group -C(O)B¹R^{8b} where R^{8b} is hydrogen or methyl, preferably methyl, B¹ is a valence bond or straight or branched alkylene, oxaalkylene or oligo-oxaalkylene group, and f is from 1 to 4; and
if B is other than a valence bond z is 1 and if B is a valence bond z is 0, if X is directly bonded to an oxygen or nitrogen atom and otherwise z is 1.

Preferably the groups R⁸ are the same. It is also preferable that at least one of the groups R⁸ is methyl, and more preferable that the groups R⁸ are all methyl.

Preferably f is 1 or 2, more preferably 2.

Preferably B¹ is:
a valence bond;
an alkylene group of formula -(CR^{3a}₂)ₐₐ-, wherein the groups -(CR^{3a}₂)- are the same or different, and in each group (CR^{3a}₂)- the groups R^{3a}- are the same or different and each group R^{3a}- is hydrogen or C₁₋₄ alkyl, preferably hydrogen, and aa is from 1 to 12, preferably 1 to 6;
an oxaalkylene group such as alkoxyalkyl having 1 to 6 carbon atoms in each alkyl moiety, more preferably -CH₂O(CH₂)₄-; or
an oligo-oxaalkylene group of formula -[(CR^{4a}₂)_{ba}O]_{ca}- where the groups -(CR^{4a}₂)- are the same or different and in each group - -(CR^{4a}₂)- the groups R^{4a} are the same or different and each group R^{4a} is hydrogen or C₁₋₄ alkyl, preferably hydrogen, and ba is from 1 to 6, preferably 2 or 3, and ca is from 1 to 12, preferably 1 to 6.

Preferred groups B¹ include a valence bond and alkylene, oxaalkylene and oligo-oxaalkylene groups of up to 12 carbon atoms.

Preferably B and B¹ are the same.

When X is a group of formula (IVD) preferably B is a group of formula -[(CR⁴₂CR⁴₂)_{b}O]_{c}CR⁴₂CR⁴₂-, eg. -(CH₂CH₂O)_{c}(CH₂CH₂)-.

The groups of formula (IVE) are: 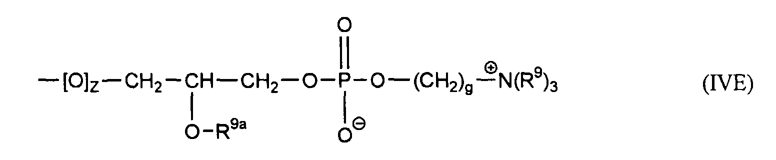 wherein the groups R⁹ are the same or different and each is hydrogen or C₁-C₄ alkyl, R^{9a} is a hydrogen or, more preferably, a group -C(O)B²R^{9b}, R^{9b} is hydrogen or methyl, preferably methyl, B² is a valence bond or a straight or branched alkylene, oxaalkylene or oligo-oxaalkylene group, and g is from 1 to 4; and
if B is other than a valence bond z is 1 and if B is a valence bond z is 0 if X is directly bonded to an oxygen or nitrogen atom and otherwise z is 1.

Preferably the groups R⁹ are the same. It is also preferable that at least one of the groups R⁹ is methyl, and more preferable that the groups R⁹ are all methyl.

Preferably g is 1 or 2, more preferably 2.

Preferably B² is:
a valence bond;
an alkylene group of formula -(CR^{3b}₂)_{ab}-, wherein the groups -(CR^{3b}₂)- are the same or different, and in each group - (CR^{3b}₂)- the groups R^{3b} are the same of different and each group R^{3b} is hydrogen or C₁₋₄ alkyl, preferably hydrogen, and ab is from 1 to 12, preferably 1 to 6;
an oxaalkylene group such as alkoxyalkyl having 1 to 6, carbon atoms in each alkyl moiety, more preferably -CH₂O(CH₂)₄-; or
an oligo-oxaalkylene group of formula -(CR^{4b}₂)_{bb}O]_{cb}- where the groups -(CR^{4b}₂)- are the same or different and in each group -(CR^{4b}₂)- the groups R^{4b} are the same or different and each group R^{4b} is hydrogen or C₁₋₄ alkyl, preferably hydrogen, and bb is from 1 to 6, preferably 2 or 3, and cb is from 1 to 12, preferably 1 to 6.

Preferred groups B² include a valence bond and alkylene, oxaalkylene and oligo-oxaalkylene groups of up to 12 carbon atoms.

Preferably B and B² are the same.

When X is a group of formula (IVE) preferably B is a group of formula -[(CR⁴₂CR⁴₂)_{b}O]_{c}CR⁴₂CR⁴₂-, eg. -(CH₂CH₂O)_{c}CH₂CH₂-.

The groups of formula (IVF) are: 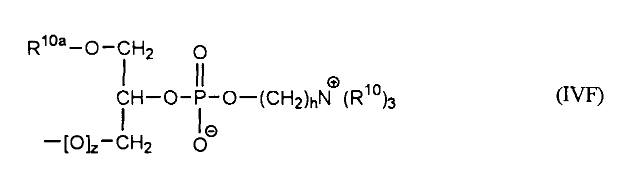 wherein the groups R¹⁰ are the same or different and each is hydrogen or C₁₋₄ alkyl, R^{10a} is hydrogen or, more preferably, a group -C(O)B³R^{10b} where R^{10b} is hydrogen or methyl, preferably methyl, B³ is a valence bond or a straight or branched alkylene, oxaalkylene or oligo-oxaalkylene group, and h is from 1 to 4; and
if B is other than a valence bond z is 1 and if B is a valence bond z is 0 if X is directly bonded to the oxygen or nitrogen and otherwise z is 1.

Preferably the groups R¹⁰ are the same. It is also preferable that at least one of the groups R¹⁰ is methyl, and more preferable that the groups R¹⁰ are all methyl.

Preferably h is 1 or 2, more preferably 2.

Preferably B³ is:
a valence bond;
an alkylene group of formula -(CR^{3c}₂)_{ac}-, wherein the groups -(CR^{3c}₂)- are the same or different and in each group (CR^{3c}₂)- the groups R^{3c} are the same or different and each group R^{3c} is hydrogen or C₁₋₄ alkyl, preferably hydrogen, and ac is from 1 to 12, preferably 1 to 6;
an oxaalkylene group such as alkoxyalkyl having 1 to 6 carbon atoms in each alkyl moiety, more preferably -CH₂O(CH₂)₄-; or
an-oligo-oxaalkylene group of formula -[(CR^{4c}₂)_{bc}O]_{cc}- where the groups -(CR^{4c}₂)- are the same or different and in each group -(CR^{4c}₂)- the groups R^{4c} are the same or different and each group R^{4c} is hydrogen or C₁₋₄ alkyl, preferably hydrogen, and bc is from 1 to 6, preferably 2 or 3, and cc is from 1 to 12, preferably 1 to 6.

Preferred groups B³ include a valence bond and alkylene, oxaalkylene and oligo-oxaalkylene groups of up to 12 carbon atoms.

Preferably B and B³ are the same.

When X is a group of formula (IVF) preferably B is a group of formula - [(CR⁴₂CR⁴₂)_{b}O]_{c}CR⁴₂CR⁴₂-, eg. -(CH₂CH₂O)_{c}CH₂CH₂-.

Particular examples of preferred monomers bearing a zwitterionic group are 2(methacryloyloxy)ethyl-2'(trimethylammonium)ethyl phosphate inner salt and 1[4(4'-vinylbenzyloxy)butane]-2"(trimethylammonium)ethyl phosphate inner salt.

Monomers bearing a zwitterionic group such as those of formula (II) and (III) may be prepared by conventional techniques using known reactions, for example using a suitable substituted alkyl (alk)acrylate or suitable substituted styrene as precursor. Examples of suitable substituted alkyl (alk)acrylates include dimethylaminoethyl(meth)acrylate and 2-hydroxyethyl(meth)acrylate.

Monomers containing a group of formula (IVB) or (IVC) may be prepared as described in Reference Example 1 to 3 or by analogous known methods.

Monomers of formula (II) or (III) containing a group of formula (IVD) in which R^{8a} is -C(O)B¹R^{8b} may be prepared by selective acylation of glycerophosphorylcholine or analogues thereof at the primary hydroxyl group with an activated acid derivative such as an acid anhydride O(C(O)B¹R^{8b})₂ or an acid halide R^{8b}B¹COHal where B¹ and R^{8b} are as defined above and Hal is halogen, followed by acylation of the secondary hydroxyl group with an appropriate acylating agent, for example methacryloyl chloride. Purification, for example by column chromatography on a suitable support, may be performed after each acylation or after the second acylation only. Suitable activated acid derivatives include acid anhydrides, acid halides, reactive esters and imidazolides. The acylations may be performed in a suitable anhydrous, aprotic solvent, for example N,N--dimethylformamide, optionally in the presence of a suitable non-nucleophilic base, for example triethylamine.

Alternatively, the primary alcohol group in glycerophosphoryl choline or an analogue thereof may be blocked by reaction with a suitable protecting group reagent, for example t-butyldimethylsilyl chloride, under standard conditions and the secondary hydroxyl group then treated with an acylating agent such as methacryloyl chloride. The t-butyldimethylsilyl protecting group may be removed by treatment with a dilute organic or mineral acid, for example p-toluene sulphonic acid, hydrochloric acid or with tetra-butylammonium fluoride. The deblocked primary hydroxyl group may then be treated with an activated acid derivative such as an acid anhydride O(C(O)B¹R^{8b})₂ or acid halide R^{8b}B¹COHal where B¹ and R^{8b} are as defined above, and Hal is halogen.

Analogues of glycerophosphorylcholine (compounds of formula (II) or (III) containing a group (IVD) where R^{8a} is hydrogen) may be prepared by reaction of phosphorus oxychloride with a bromoalcohol in an inert aprotic solvent, such as dichloromethane, to give a bromoalkylphosphorodichloridate. The dichloro derivative thus produced may then be treated with an appropriately protected glycerol derivative, for example 2,2-dimethyl 1,3-dioxolane-4-methanol, in the presence of a base, for example triethylamine, followed by acid hydrolysis to give a bromoalkylphosphoroglycerol derivative. This may then be treated with an amine NR⁸₃, where R⁸ is as defined above, for example trimethylamine, to generate the glycerophosphorylcholine analogue. This preparation is depicted in the following scheme. 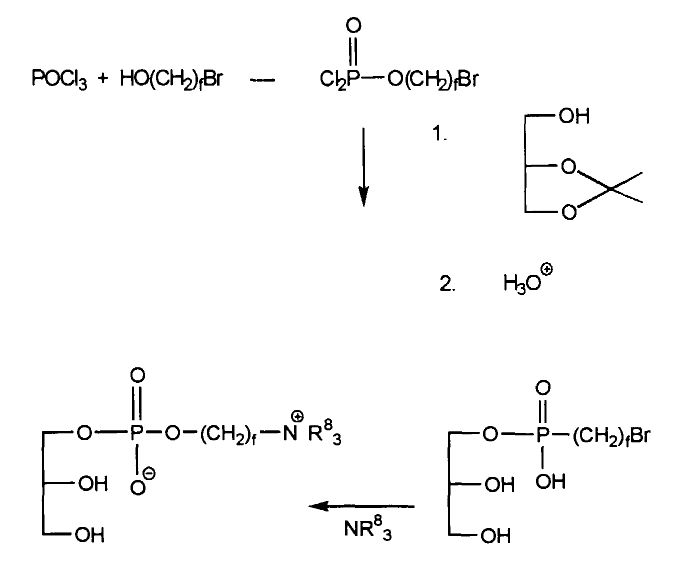 where R⁸ and f are as defined in relation to groups of formula (IVD).

Monomers of formula (II) or (III) containing a group of formula (IVE) in which R^{9a} is -C(O)B²R^{9b} may be prepared by the selective acylation of glycerophosphorylcholine or an analogue thereof at the primary hydroxyl group with for example, methacryloyl chloride followed by reaction at the secondary hydroxyl group using an activated acid derivative, such as an acid halide O(C(O)B²R^{9b})₂ or an acid halide R^{9b}B²COHal, where B² and R^{9b} are as defined above and Hal is halogen. The intermediates and final products may be purified, as necessary using column chromatography. Optionally, protecting group strategy, similar to that outlined above in relation to production of monomers containing a group of formula (IVD) may be employed.

Monomers of formula (II) or (III) containing a group of formula (IVF) may be prepared in an analogous manner to monomers containing groups of formula (IVD) or (IVE).

### Comonomers bearing an ionic group

The comonomers bearing an ionic group capable of binding to a surface by ionic interaction are of general formula (XII).

Preferred comonomers of formula (XII) are therefore those of formula (XIII) and (XIV): 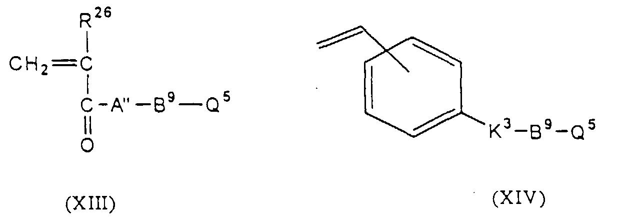 wherein:
R²⁶, A", B⁹, K³ and Q⁵ are as defined in relation to formula (XII).

Preferably in the compounds of formula (XIII) R²⁶ is hydrogen, methyl or ethyl, more preferably methyl, so that the compound of formula (XIII) is preferably an acrylic acid, methacrylic acid or ethacrylic acid derivative.

In the compounds of formula (XIV), K³ may for instance be a valence bond. Where K³ is a group then x is preferably from 1 to 6, more preferably 1, 2 or 3 and most preferably x is 1. When K³ is a group -(CH₂)ₓNR²⁸-, (CH₂)ₓOC(O)NR²⁸-, -(CH₂)ₓNR²⁸C(O)O-, -(CH₂)ₓNR²⁸C(O)-, -(CH₂)ₓC(O)NR²⁸- or - -(CH₂)ₓNR²⁸C(O)NR²⁸- then R²⁸ is preferably hydrogen, methyl or ethyl, more preferably hydrogen.

In the compounds of formula (XIV) preferably the vinyl group is para to the group -K³-B⁹-Q⁵.

Preferably B⁹ is:
an alkylene group of formula -(CR²⁹₂)_{y}- wherein the groups -(CR²⁹₂)- are the same or different, and in each group - -(CR²⁹₂)- the groups R²⁹ are the same or different and each group R²⁹ is hydrogen or C₁₋₄ alkyl, preferably hydrogen, and y is from 1 to 12, preferably 1 to 6;
an oxaalkylene group such as alkoxyalkyl having 1 to 6 carbon atoms in each alkyl moiety; or
an oligo-oxaalkylene group of formula - [(CR³⁰₂)_{yy}O]ₓₓ(CR³⁰₂)_{yy}- where the groups -(CR³⁰₂)- are the same or different and in each group -(CR³⁰₂)- the groups R³⁰ are the same or different and each group R³⁰ is hydrogen or C₁₋₄ alkyl, preferably hydrogen, and yy is from 1 to 6, preferably 2 or 3, and xx is from 1 to 12, preferably 1 to 6.

Preferred groups B⁹ include alkylene, oxaalkylene and oligo-oxaalkylene groups of up to 12 carbon atoms.

Particular examples of the group B⁹ are -CH₂-, -CH₂CH₂- and -(CH₂)₆-.

The group Q⁵ may be either anionic or cationic depending upon the surface to be coated. Where the surface has a cationic surface charge, the group Q⁵ will be anionic and may for example be a carboxylate, sulphonate, hydrogenphosphate or phosphate group. Where the surface has an anionic surface charge, the group Q⁵ will be cationic and may for example be a group -NR³¹₃^{⊕} in which each group R³¹ is the same or different, and is hydrogen or alkyl of 1 to 6 carbon atoms two of which groups R³¹ may together form a heterocyclic ring containing from 5 to 7 atoms, preferably hydrogen or methyl, a group N^{⊕}Het, where Het is an unsaturated heterocyclic group such as pyridyl, substituted or unsubstituted by one or more alkyl groups of 1 to 4 carbon atoms, or a group -PR³²₃^{⊕} in which each group R³² is the same or different and is hydrogen or alkyl of 1 to 6 carbons atoms, two of which groups R³² may together form a heterocyclic ring containing from 5 to 7 atoms, preferably methyl.

Particular examples of comonomers bearing an ionic group include acrylic acid, methacrylic acid, 2-sulfoethylmethacrylate, 2-methacryloyloxyethyl phosphate, p-styrenesulphonic acid, 2-(methacryloyloxyethyl)-trimethylammonium chloride, 3-aminopropyl methacrylamide, vinylbenzyl trimethylammonium chloride.

Comonomers bearing a group capable of binding a polymer to a surface by ionic interaction, such as those of formula (XIII) and (XIV) are commercially available or may be prepared by conventional techniques using known reactions.

### Comonomers bearing a reactive group

Preferred comonomers, which are suitable for providing cross-linking of the polymer contain a reactive group capable of covalently binding to other reactive groups in the polymer or with bridging molecules and are of general formula (IX)

Y²-Q¹ (IX)

where Y² is an ethylenically unsaturated polymerisable group selected from 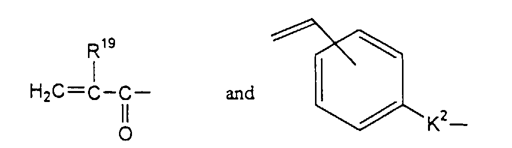 where
R¹⁹ is hydrogen or C₁-C₄ alkyl,
K² is a group - (CH₂)_{q}OC(O)-, -(CH₂)_{q}C(O)O-, - (CH₂)_{q}OC(O)O-, -(CH₂)_{q}NR²⁰-, -(CH₂)_{q}NR²⁰C(O)-, -(CH₂)_{q}C(O)NR²⁰-, (CH₂)_{q}NR²⁰C(O)O-, -(CH₂)_{q}OC(O)NR²⁰-, -(CH₂)_{q}NR²⁰C(O)NR²⁰- (in which the groups R²⁰ are the same or different), -(CH₂)_{q}O-, or (CH₂)_{q}SO₃-, or a valence bond and q is from 1 to 12 and R²⁰ is hydrogen or a C₁-C₄ alkyl group; and
Q¹ is a reactive group capable of reacting to provide covalent binding to a surface.

Preferred comonomers of formula (IX) bearing a reactive group Q¹ include those of formula (X) and (XI) defined below.

The compounds of formula (X) are: 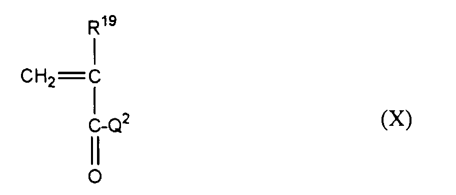 wherein:
R¹⁹ is as defined with reference to formula (X), and Q² is a reactive group.

Preferably in the compounds of formula (X) R¹⁹ is hydrogen, methyl or ethyl, more preferably methyl, so that the compound of formula (X) is preferably an acrylic acid, methacrylic acid or ethacrylic acid derivative.

Preferably Q² is hydrogen, or more preferably -OH or a group of the formula:

-T-B⁷-Q³

where
T is -O-, or -NR²¹- where R²¹ is hydrogen, C₁-C₄ alkyl or a group -B⁷-Q³;
B⁷ is a valence bond or, more preferably, a straight or branched alkylene, oxaalkylene or oligo-oxaalkylene chain; and
Q³ is a reactive group capable of reacting to provide covalent binding to a surface such as an aldehyde group or a silane or siloxane group containing one or more reactive substituents such as halogen, for example chlorine, or alkoxy, generally containing from 1 to 4 carbon atoms, for example methoxy or ethoxy, or, more preferably Q³ is a hydroxyl, amino, carboxyl, epoxy, -CHOHCH₂Hal, (in which Hal is a halogen atom such as chlorine, bromine or iodine) succinimido, tosylate such as 2(N-methylpyridinium) tosylate, triflate, imidazole carbonyl-amino, or an optionally substituted triazine group.

Preferably B⁷ is:
an alkylene group of formula -(CR²²₂)ᵣ-, wherein the groups -(CR²²₂)- are the same or different, and in each group -(CR²²₂)- the groups R²² are the same or different and each group R²² is hydrogen or C₁₋₄ alkyl, preferably hydrogen, and r is from 1 to 12, preferably 1 to 6;
an oxaalkylene group such as alkoxyalkyl having 1 to 6 carbon atoms in each alkyl moiety; or
an oligo-oxaalkylene group of formula -[(CR²³₂)ₛO]ₜ(CR²³₂)ₛ- where the groups -(CR²³₂)- are the same or different and in each group -(CR²³₂)- the groups R²³ are the same or different and each group R²³ is hydrogen or C₁₋₄ alkyl, preferably hydrogen, and s is from 1 to 6, preferably 2 or 3, and t is from 1 to 11, preferably 1 to 5.

Preferred groups B⁷ include alkylene, oxaalkylene and oligo-oxaalkylene groups of up to 12 carbon atoms.

Where Q³ is a silane or siloxy group, preferably B⁷ is an alkylene group of 1 to 6, preferably 2 to 4, more preferably 3 carbon atoms.

Particular examples of the group B⁷ are -CH₂-, -CH₂CH₂- and - -(CH₂)₆-.

The compounds of formula (XI) are: 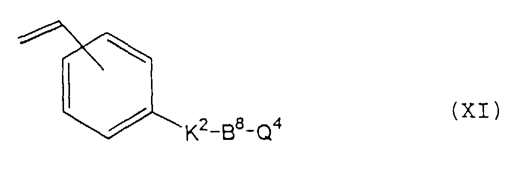 wherein
K² is as defined in relation to formula (IX) and;
B⁸ is a straight of branched alkylene, oxaalkylene or oligo-oxaalkylene chain and
Q⁴ is a reactive group capable of reacting to provide covalent binding to a surface, for example an aldehyde group or a silane or siloxane group containing one or more reactive substituents such as halogen, for example chlorine, or alkoxy, generally containing from 1 to 4 carbon atoms, for example methoxy or ethoxy, or, more preferably, Q⁴ is a hydroxyl, amino, carboxyl, epoxy, -CHOHCH₂Hal, (in which Hal is a halogen atom such as chlorine, bromine or iodine) succinimido, tosylate, triflate, imidazole carbonyl-amino or optionally substituted triazine group.

In the compounds of formula (XI) preferably the vinyl group is para to the group -K²-B⁸-Q⁴.

K² may for instance be a valence bond. Where K² is a group then preferably q is from 1 to 6, more preferably 1,2 or 3 and most preferably q is 1. When K² is a group -(CH₂)_{q}NR²⁰-, -(CH₂)_{q}OC(O)NR²⁰, -(CH₂)_{q}NR²⁰C(O)O-, -(CH₂)_{q}NR²⁰C(O)-, -(CH₂)_{q}C(O)NR²⁰- or - (CH₂)_{q}NR²⁰C(O)NR²⁰- then R²⁰ is preferably hydrogen, methyl or ethyl, more preferably hydrogen.

Preferably B⁸ is:
an alkylene group of formula -(CR²⁴₂)ᵤ-, wherein the groups -(CR²⁴₂)- are the same or different, and in each group -(CR²⁴₂)- the groups R²⁴ are the same or different and each group R²⁴ is hydrogen or C₁₋₄ alkyl, preferably hydrogen, and u is from 1 to 12, preferably 1 to 6;
an oxaalkylene group such as alkoxyalkyl having 1 to 6 carbon atoms in each alkyl moiety; or
an oligo-oxaalkylene group of formula -[(CR²⁵₂)ᵥO]_{w}(CR²⁵)ᵥ- where the groups -(CR²⁵₂)- are the same or different and in each group -(CR²⁵₂)- the groups R²⁵ are the same or different and each group R²⁵ is hydrogen or C₁₋₄ alkyl, preferably hydrogen, and v is from 1 to 6, preferably 2 or 3, and w is from 1 to 12, preferably 1 to 6.

Preferred groups B⁸ include alkylene, oxaalkylene and oligo-oxaalkylene groups of up to 12 carbon atoms. In one embodiment B⁸ and K² contain together up to 12 carbon atoms.

Particular examples of comonomers bearing a reactive group include chloromethylstyrene, methacrylic acid, 2-aminoethylmethacrylate, 2,3-epoxypropyl methacrylate, 3-chloro-2-hydroxypropylmethacrylate, 2-methacryloyloxyethyl dichlorotriazine, 3-chloro-2-hydroxypropylmethacrylamide and glycidyl methacrylate and reactive methacrylate esters containing the group HetC(O)O- in which (Het) is a heterocyclic ring, for example benzotriazole or imidazole and reactive methacrylate esters containing a group R¹⁶OC(O)- in which R¹⁶ is a succinimido or pentafluorophenyl group.

Particularly preferred comonomers bearing reactive groups are 2-aminoethylmethacrylate and 3-chloro-2-hydroxypropylmethacrylate.

Comonomers bearing a reactive group such as those of formula (X) or (XI), are commercially available or may be prepared by conventional techniques using known reactions.

Comonomers of formula (X), which are dichlorotriazine monomers may be prepared in known manner for example by reacting a substituted hydroxyalkyl(alk)acrylate or aminoalkyl(alk)acrylate with trichlorotriazine in a suitable solvent and in the presence of a base.

Comonomers of formula (XI) which are reactive methacrylate esters in which the ester group contains an imidazole group may be prepared in known manner by reacting a substituted hydroxyalkyl(alk)acrylate (e.g. 2-hydroxyethyl(meth)acrylate), polyethyleneoxide(meth)acrylate or polypropyleneoxide(meth)acrylate with 1,1-carbonyl-diimidazole in a dry solvent. Analogous known methods may be used to prepare succinimido and pentafluorophenyl methacrylate-esters of formula (X), by reaction with a reactive ester, acid halide or acid anhydride.

Where comonomers containing a reactive group are used it will be appreciated that not all of the reactive groups need necessarily react and that groups not so bound may participate in other chemistry. Such groups may in particular provide points for the attachment of moieties such as ligands to the polymer, when coated onto a substrate.

Comonomers containing a reactive group, such as compounds of formula (X) and (XI) may be used as comonomers containing crosslinkable groups, which react with other crosslinkable groups, rather than a monomer which bind covalently to a surface.

Where comonomers containing a reactive group are used to provide such crosslinkable groups then the crosslinkable groups and/or the copolymerisation conditions will be chosen so that they will not crosslink when the comonomers are copolymerised; thus the polymerisation product will be an uncrosslinked linear copolymer which may be subsequently crosslinked after coating the copolymer onto a surface so as to improve the stability of the coating. When such crosslinking between linear polymer chains is employed the crosslinkage may be formed either between two such crosslinkable groups or between a crosslinkable group and a non-inert group in a diluent comonomer residue (defined later). Such a crosslinkage may be formed either by direct reaction of the groups forming the crosslinkage or by reaction of these groups with a reactive bridging molecule for example a reactive gas, such as ammonia.

Preferred reactive comonomers which are used to crosslink the copolymer are those of formula (X) or (XI) in which Q², or Q⁴ contains a crosslinkable cinnamyl, epoxy, -CHOHCH₂Hal (in which Hal is a halogen atom), methylol, silyl, an ethylenically unsaturated crosslinkable group, such as an acetylenic, diacetylenic, vinylic or divinylic group, or an acetoacetoxy or chloroalkyl sulfone, preferably chloroethyl sulphone, group.

Particular examples of comonomers bearing a group capable of crosslinking include methacrolein, cinnamylmethacrylate, 2,3-epoxypropylmethacrylate, 3-chloro-2-hydroxypropylmethacrylate, hydroxymethylmethacrylamide, 3--(trimethoxysilyl)propylmethacrylate, 2-acetoacetoxyethylmethacrylate, 3-(vinylbenzyl)-2-chloroethylsulphone.

When a polymer of the invention, containing crosslinkable groups, is coated on a substrate the polymer is in substantially uncrosslinked form. After coating, crosslinking of crosslinkable groups may be performed to increase the strength and stability of the polymer coating.

### Diluent Comonomers

In addition to the residues of monomers containing a group bearing a zwitterionic and ionic comonomers, the polymers of the present invention may comprise residues of a diluent comonomer.

Such diluent comonomers may be used to give the polymer the desired physical and mechanical properties. They may be of any known conventional radical polymerisable, preferably ethylenically unsaturated, type compatible with other comonomer(s).

Particular examples of diluent comonomers include alkyl(alk)acrylate preferably containing 1 to 4 carbon atoms in the alkyl group of the ester moiety, such as methyl (alk)acrylate; a dialkylamino alkyl(alk)acrylate, preferably containing 1 to 4 carbon atoms in each alkyl moiety of the amine and 1 to 4 carbon atoms in the alkylene chain, e.g. 2-(dimethylamino)ethyl(alk)acrylate; an alkyl(alk)acrylamide preferably containing 1 to 4 carbon atoms in the alkyl group of the amide moiety; a hydroxyalkyl(alk)acrylate preferably containing from 1 to 4 carbon atoms in the hydroxyalkyl moiety, e.g. a 2-hydroxyethyl(alk)acrylate; or a vinyl monomer such as an N-vinyl lactam, preferably containing from 5 to 7 atoms in the lactam ring, for instance vinyl pyrrolidone; styrene or a styrene derivative which for example is substituted on the phenyl ring by one or more alkyl groups containing from 1 to 6, preferably 1 to 4, carbon atoms, and/or by one or more halogen, such as fluorine atoms, e.g. (pentafluorophenyl)styrene.

Other suitable diluent comonomers include polyhydroxyl, for example sugar, (alk)acrylates and (alk)acrylamides in which the alkyl group contains from 1 to 4 carbon atoms, e.g. sugar acrylates, methacrylates, ethacrylates, acrylamides, methacrylamides and ethacrylamides. Suitable sugars include glucose and sorbitol. Particularly suitable diluent comonomers include methacryloyl glucose or sorbitol methacrylate.

Further diluents which may be mentioned specifically include polymerisable alkenes, preferably of 2-4 carbon atoms, eg. ethylene, dienes such as butadiene, alkylene anhydrides such as maleic anhydride and cyano-substituted alkylenes, such as acrylonitrile.

Diluent comonomers may be obtained by conventional known methods.

Of the above diluent comonomers some are inert and act simply to modify the physical and mechanical properties of copolymers containing them. Others, and in particular the hydroxyalkyl(alk)acrylates and polyhydroxyl(alk)acrylates have a reactive role in addition to simply modifying physical and mechanical properties. Such comonomers contain functional groups, such as hydroxyl groups, which may react with a crosslinking group or may react with reactive groups in other molecules to attach them to the copolymer.

It will also be appreciated that alkyl(alk)acrylates containing 6 or more carbon atoms in the alkyl group may be regarded as either diluent comonomers or comonomers capable of binding a polymer to a surface by physisorption. In particular it should be noted that a copolymer which contains such a diluent comonomer and a reactive comonomer capable of reacting at a surface to provide covalent binding to a surface may be used to coat a hydrophilic surface, the reactive comonomer providing binding to the surface and the diluent modifying physical and mechanical properties. However, such a copolymer may also be used to coat hydrophobic surfaces, in which the "diluent" monomer will act as a comonomer capable of binding to the surface by physisorption and the comonomer capable of covalent binding will act as a crosslinkable comonomer.

According to a feature of the present invention polymers of the invention are prepared by radical copolymerisation of a comonomer containing a zwitterionic group, an ionic comonomer and optionally a diluent and/or crosslinkable comonomer.

Any conventional technique may be used for polymerisation, typically thermal or photochemical polymerisation. Where comonomers capable of producing crosslinking in the coated polymer film are present, the polymerisation conditions are set such that crosslinking does not occur during polymerisation. Thus, for example, actinic radiation would not be used to prepare a polymer containing a comonomer which can form crosslinks by exposure to actinic radiation.

For thermal polymerisation a temperature from 40 to 100°C, typically 50 to 80°C is used. For photochemical polymerisation actinic radiation such as gamma, U.V., visible or microwave radiation may be used. Typically U.V. radiation of wavelength 200 to 400 nm is used.

The polymerisation is generally performed in a reaction medium, which is for instance a solution or dispersion using as a solvent for example acetonitrile, dimethyl formamide, chloroform, dichloromethane, ethyl acetate, dimethyl sulphoxide, dioxane, benzene, toluene, tetrahydrofuran, or where the polymer does not contain groups which react with protic solvents, water or an alkanol containing from 1 to 4 carbon atoms, e.g. methanol, ethanol or propan-2-ol. Alternatively, a mixture of any of the above solvents may be used.

The polymerisation may be carried out in the presence of one or more polymerisation initiators, such as benzoyl peroxide, 2,2'-azo-bis(2-methylpropionitrile) or benzoin methyl ether. Other polymerisation initiators which may be used are disclosed in "Polymer Handbook 3rd edition, Ed. J. Brandrup and E.H. Immergut, Pub. Wiley-Interscience, New York, 1989.

Generally the copolymerisation is performed for 1 to 72 hours, preferably 8 to 48, for instance 16 to 24 hours, and under an inert atmosphere of for example nitrogen or argon. The polymer is generally purified by dialysis, precipitation in a non-solvent (e.g. diethyl ether or acetone) or ultrafiltration. The resulting polymer is generally dried under vacuum, eg. for 5 to 72 hours and has a molecular weight from 10,000 to 10 million, preferably from 20,000 to 1 million.

The precise proportion and nature of the various comonomers used to prepare a copolymer according to the present invention comprising residues of a monomer containing a zwitterionic group and a comonomer containing an ionic group may be adjusted to provide a copolymer which is particularly suitable for coating a particular surface. Thus the proportion of comonomer containing a group capable of stably binding the polymer to a surface may be adapted to provide efficient binding by ionic interaction with a particular surface. Similarly the proportion of the monomer containing a zwitterionic group and of diluent and/or crosslinkable comonomer may be adapted to provide the desired biocompatibility and physical and mechanical properties. It will be appreciated that to obtain the desired combination of properties more than one type of monomer containing a zwitterionic group, comonomer containing an ionic group or crosslinkable and/or diluent comonomer may be used.

The monomer composition which is subjected to polymerisation to provide a polymer according to the invention comprises a minimum of 0.01%, preferably 1%, more preferably 5% by weight of monomer or monomers containing a zwitterionic group and a maximum of 99.9%, preferably 99%, more preferably 95% by weight of other monomer or monomers. Such other monomer or monomers may be a monomer or monomers containing an ionic group a diluent monomer or monomers and/or a crosslinkable monomer or monomers.

The monomer composition further comprises a minimum of 0.01%, preferably 1%, more preferably 5% by weight of monomer or monomers containing an ionic group and a maximum of 99.9%, preferably 99%, more preferably 95% by weight of other monomer or monomers. Such other monomer or monomers may be a monomer or monomers containing a zwitterionic group a diluent monomer or monomers and/or a crosslinkable monomer or monomers.

Preferably the molar ratio in the copolymer of zwitterionic comonomer residues to comonomer residues containing an ionic group capable of binding the polymer to a surface by ionic interactions is from 5:95 to 95:5, more preferably 50:50 to 90:10. In addition, the copolymer preferably comprises from 5% to 50%, more preferably 10% to 25%, by mole residues of diluent monomer and/or from 0.1% to 20%, more preferably 1% to 10%, by mole residues of crosslinkable comonomer, provided that where residues of both diluent and crosslinkable comonomer are present, they do not exceed in combination 50%, preferably 35% by mole.

In addition the monomer or comonomer composition may comprise further components such as a polymerisation initiator, chain transfer agent, acid, base, surfactant, emulsifier or catalyst of conventional type each in an amount from 0.1% to 5%, typically from 0.2% to 3% and preferably about 0.5%, by weight each relative to the total weight of the monomers.

As a further feature the present invention provides a process for biocompatibilising a surface which comprises coating the surface with a polymer according to the present invention. Various types of surfaces may be coated depending upon the nature of the groups in the polymer capable of binding it to the surface.

Surfaces having ionic groups such as carboxyl, sulphonate, phosphate, ammonium or phosphonium groups-are particularly suitable for treatment with polymers according to the invention comprising residues of monomer containing a group capable of binding the polymer by ionic interaction.

Where necessary the surface of the substrate may be functionalised prior to treatment. For surfaces which do not have ionic groups it is necessary to introduce these groups at the surface before treatment with the polymer. This can be effected by known etching or derivatising techniques, such as plasma discharge, which introduce the appropriate surface functionality (see for example "Chemical Reactions of Polymers" Ed. E.M. Fettes, 1964, Interscience, London)

Treatment with such a polymer is generally carried out by treating the surface with a solution of the polymer, generally an alcoholic, aqueous alcoholic or aqueous solution. Treatment is generally carried out at a temperature from -5 to 50°C, for from 0.1 to 24 hours and at a pH from 2 to 13.

Materials may be coated with polymers of the invention by known techniques, such as dip-coating, spray-coating, web-coating or spin coating.

Materials having surfaces coated according to the present invention can be used as a construction material for implants or prostheses for the human or animal body, particularly where these implants or prostheses are to come into direct physical contact with blood and where biocompatibility and particularly haemocompatibility are required e.g. in heart valves. They can also be used in the construction of membranes and other devices that are to be brought into contact with blood or other body fluids on an extra-corporeal basis, for example in heart-lung machines or artificial kidneys.

Additionally the polymers of the invention can be used to coat materials employed in down stream processing applications e.g. separation membranes and process equipment and tubing. In particular the materials of the invention can be used to modify the surface properties of biofiltration membranes in bioreactors and fermentation systems, where the membranes come into direct contact with complex biological solutions containing e.g. proteins, polysaccharides, fats and even whole cells. The polymers of the invention are particularly useful in reducing membrane fouling by the components of a process solution.

When the polymers of the present invention are used to coat the surface of a material which is then used in the construction coat of finished devices, it may be necessary to take precautionary steps to ensure that the coated surface is not damaged and the effectiveness of the treatment reduced before the finished device is produced.

In addition, the polymers of the present invention can be used to coat finished implants, prostheses, membranes, catheters, contact lenses, intraocular lenses, and other devices which are coated with a polymer according to the present invention to impart biocompatibility to the article.

The invention thus also provides a substrate, for instance a finished device, comprising a surface having a coating thereon of a polymer of the present invention.

The invention also provides a liquid composition suitable for coating surfaces which is a solution of the polymer in a solvent.

The present invention will now be further illustrated by the following Examples:

### Examples

The following assays have been used to evaluate coatings of polymers according to the present invention.

### Protein adsorption using an enzyme immunoassay

The assay determines adsorption of human fibrinogen at a surface. This protein is representative of protein which is typically adsorbed at a surface. The assay can be readily modified to determine the adsorption of other proteins.

Discs (7mm in diameter) of untreated material (as controls) and material treated with polymer as described below, were prepared and washed with phosphate buffered saline (PBS) for at least 10 minutes in the wells of microplates. The samples were incubated with human plasma (300µl) for 10 minutes and then washed with PBS three times. Each of the test samples and each of the control samples were treated with human fibrinogen-specific antibody (300µl) for 30 minutes and again washed with PBS three times. As a control for non-specific binding of antibody to the samples, each sample was also incubated with non-specific antibody (300µl) for 30 minutes. A conjugate of horseradish peroxidase and a second antibody specific to the first antibody (300µl) was added to both the test samples and the controls and incubated for 30 minutes before washing. Each of the test samples and the controls were transferred to new microplates and a solution of 2,2'-azino-bis(3-ethyl benzthiazoline-6-sulphonic acid) (ABTS) in phosphate-citrate buffer (300µl, 0.6mg/ml) added, the reaction was allowed to proceed for 10 minutes. At this time an aliquot of the mixture (200µl) was removed and added to a solution of citric acid and sodium azide in distilled water (20µl, 0.21g/ml and 2mg/ml respectively). The optical density of the solutions was measured using a Techgen automated plate reader at 650nm using the ABTS solution as blank. In an alternative procedure, rather than using ABTS, each of-the samples was transferred to wells of new microplates and a solution of o-phenylene diamine (OPD) in phosphate-citrate buffer (300µl, 0.4mg/ml) added, and the reaction was allowed to proceed for 10 minutes. At this time an aliquot of the mixture (200µl) was removed from each well and the optical density of the solutions was measured using a Techgen automated plate reader at 450nm using the OPD solution as blank.

### Activated Platelet Study

Blood was collected from a healthy adult volunteer using the double syringe method where the first 5ml of blood is discarded. The blood was collected into tri-sodium citrate (32g/l) in the proportion of 9 volumes to 1 volume citrate in plastic tubes. The samples were kept at room temperature on a spiral mixer until used.

Discs (7mm in diameter) of untreated material as controls and material treated with polymers as described below were prepared and placed into the wells of a microplate. The samples were incubated with whole fresh citrated blood (200µl) on a rotary mixer for 30 minutes before washing in PBS four times. Platelet activation was measured by a proprietary assay [Lindon, J.N. et al., Blood, 68, 355 (1986)].

In an alternative procedure half of the test replicates were incubated with citrated blood (200µl) and the remainder were incubated with EDTA-treated blood on a phase shaker for 30 minutes before washing in PBS four times. Platelet activation was measured in a manner similar to that described above for detection of proteins by enzyme immunoassay using antibodies against GMP140 to detect the presence of this platelet activation marker on the surface of biomaterials. In the presence of EDTA, which extracts calcium from inside platelets, activation is inhibited, so that incubation with EDTA-treated blood acts as a non-specific control for activation, obviating the need for incubation in non-specific antibody.

### C-Reactive protein (CRP) binding assay

C-reactive protein is a protein which binds specifically to isolated ammonium phosphate esters groups e.g. phosphoryl choline groups which are attached to a surface.

Discs (7mm in diameter) of untreated material and material treated with polymer as described below, were prepared and washed with HEPES-buffered saline (HBS) for a least 10 minutes in the wells of microplates. The samples were incubated in quadruplet for 45 minutes in a protein solution consisting of bovine serum albumin (BSA) (40 mg/ml) and CRP (0.012 mg/ml) in HBS and containing calcium chloride (1mM). In parallel, identical samples (both coated and uncoated) were incubated either in BSA/Ca²⁺ solution in the absence of CRP, in BSA/CRP/Ca²⁺ solution in the presence of soluble phosphoryl choline (1.5 mg/ml) or in BSA/CRP solution containing EDTA (20mM) rather than calcium chloride.

After incubation, all the samples were washed in phosphate buffered saline (PBS) three times and then incubated for 1 hour in 300µl of a 1:100 dilution of commercially available anti-CRP antibody conjugated with horseradish peroxidase. The samples were washed three times in PBS as before and transferred to new microplates. A solution of o-phenylene diamine (OPD, 0.4 mg/ml) in phosphate-citrate buffer was added and the reaction allowed to proceed for ten minutes. At this time an aliquot of the mixture (200µl) in each of the wells was transferred to a new well, and the optical density of the solutions measured using a Techgen automated plate-reader at 450 nm using the OPD solution as a blank.

A positive control containing isolated phosphoryl choline groups may be provided using beaded agarose immobilised with p-aminophenylphosphoryl choline. The specificity of CRP binding may be demonstrated by inhibition by phosphoryl choline and dependance upon the presence of calcium.

### Example 1

### Preparation of poly(2(methyacryloyloxyethyl)-2'-(trimethyl- ammonium)ethyl phosphate inner salt -co-2-aminoethylmethacrylate) (9:1)

2(Methacryloyloxyethyl)-2'-(trimethylammonium)ethyl phosphate inner salt (9.96g, 0.0335 mole) was dissolved in methanol (115ml). Water (10ml) was added followed by the addition of 2-aminoethylmethacrylate (0.5571g, 0.0034 mole). The solution was stirred (250 rpm) at 22°C under a stream of nitrogen (70ml/min) for 30 minutes. 2,2'Azo-bis(2methylpropionitrile) 0.12g, 0.73mmole) was added and the flow of nitrogen was reduced to 9ml/min, the temperature was raised to 60°C. The temperature and nitrogen flow rate were maintained for 16 hours.

The mixture was allowed to cool and transferred to centrifuge tubes. The samples were centrifuged for 30 minutes at 4000 rpm. The samples were combined and the polymer precipitated by dropwise addition to acetone (800ml). The acetone was decanted from the polymer and the polymer washed with acetone (200ml). The polymer was isolated by vacuum filtration under a nitrogen atmosphere and finally dried in vacuo overnight at room temperature. IR (cm⁻¹;KBr disc) 3435, 2929, 2096, 1732, 1628, 1245, 1166, 1089, 970.

### Example 2

### Preparation of poly(2(methacryloyloxyethyl)-2'(trimethylammonium)ethyl phosphate inner salt -co-methacrylic acid (7:3)

The polymer was prepared by a method analogous to reference example 5 below using 2(methacryloyloxyethyl)-2'(trimethylammonium)ethyl phosphate inner salt (4.44g,0.0149 mole), and methacrylic acid (0.54g,0.0063 mole) dissolved in propan-2-ol (25ml) and water (25ml). The polymer was isolated by precipitation in acetone (500ml), redissolved in methanol (50ml) and isolated by precipitation in diethylether (500ml).

The resulting polymer, obtained in 30% yield was a white solid.
NMR (100MHz, d, ppm, CD₃OD/CDCl₃) 4.2-4.4(b), 3.8-4.2(b), 3.6-3.8(b), 3.3(s), 1.8-2.2(b), 1.5-1.8(b), 1.2-1.5(s), 0.8-1.0(s)
IR(cm⁻¹, KBr disc) 3430, 2929, 2854, 1732, 1469, 1246, 1156, 1089, 968, 788

This polymer was used to treat cellulose film which had been treated with 2-aminoethylmethacrylate as follows:

A section of cellulose dialysis membrane (4 x 6cm) was taken, and placed into a solution of 2-aminopropylmethacrylate (3.34g) and ceric ammonium nitrate (0.05g) in distilled water (20ml). The solution was deoxygenated with N₂ for 10 minutes, then the vessel was sealed, and left at room temperature for 2 hours. The cellulose sample was then removed from the solution, then washed extensively in distilled water for 24 hours.

The presence of amine hydrochloride moieties on the grafted sample was demonstrated by the differential uptake of anionic and cationic dyes (Trypton blue and methylene blue respectively).

Strips of the functionalised cellulose (0.5cm x 2cm) were placed in a 10% w/w solution of the polymer in water. The samples were left to stand at room temperature for 1 hour, then washed extensively in distilled water (200ml) for 2 hours.

Following the aqueous wash, the treated cellulose was placed into a solution of acid molybdate spray reagent and left to stand for 1 hour, then removed and washed with distilled water. The presence of phosphate groups on the sample was demonstrated by the development of a blue colour.

### Example 3

### Preparation of poly(2(methacryloyloxyethyl)-2'(trimethylammonium)ethyl phosphate inner salt -co- (2-methacryloyloxyethyl trimethylammonium chloride (7:3)

2(Methacryloyloxyethyl)-2'(trimethylammonium)ethyl phosphate inner salt (4.45g, 0.0151 mole), 2-methacryloyloxyethyltrimethylammonium chloride (1.96g of a 75% aqueous solution, 0.0071 mole) were dissolved in ethanol (50ml). The solution was stirred (250rpm) at 23°C under a stream of nitrogen (50ml/min) for 30 minutes. 2,2'-Azo-bis(2 methylpropionitrile) (0.02g,0,122 mole) was added and the flow of nitrogen was reduced to 10ml/min, the reaction temperature was raised to 60°C. This temperature and nitrogen flow rate were maintained for 40 hours.

The mixture was allowed to cool and filtered under vacuum. The polymer was isolated from this mixture by precipitation in diethylether (500ml), vacuum filtration and drying.

The resulting polymer, obtained in 68% yield was a white solid.
NMR (100MHz, d, ppm, CD₃OD/CDCl₃) 4.2-4.4(b), 3.8-4.2(b), 3.6-3.8(b), 3.3(s), 1.8-2.2(b), 1.5-1.8(b), 1.2-1.5(s), 0.8-1.0(s)
IR(cm⁻¹,KBr disc) 3430, 2929, 2854, 1732, 1469, 1246, 1156, 1089, 968, 788.

The polymer was used to treat cellulose film which had been treated with 3-sulphopropyl methacrylate potassium salt using the method described in Example 2 but using 3-sulphopropyl methacrylate potassium salt (4.92g) rather than 2-aminopropylmethacrylate.

The presence of sulphate moieties on the grafted sample was demonstrated by the differential uptake of anionic and cationic dyes (Trypton blue and methylene blue respectively).

Strips of the functionalised cellulose (0.5cm x 2cm) were treated with a 10% w/w solution of the polymer in water in an analogous manner to that described in Example 2 and the presence of phosphate groups was demonstrated in the same way.

### Reference Example 1

### Preparation of 2(methacryloyloxyethyl)-2'-(trimethylammonium)ethyl Phosphate inner salt

The preparation is illustrated by the reaction scheme A which follows.

### a) 2 -Chloro-1,3-dioxaphospholane (1)

In a flask fitted with a pressure equalising dropping funnel, reflux condenser (fitted with a CaCl₂ guard tube) and magnetic stirrer, was placed a solution of phosphorus trichloride (220ml; 346.3g; 2.52mol) in dichloromethane (500ml). Ethylene glycol (139ml; 154.7g, 2.49mol) was then added dropwise via the dropping funnel at such a rate that the evolution of HCl did not become too excessive. On the addition of the ethylene glycol, the condenser was arranged for distillation, and the dichloromethane removed at atmospheric pressure. When the distillate temperature reached 60°C the flask was arranged for vacuum distillation using a water pump. Distillation then gave 2-chloro-1,3-dioxaphospholane (158ml; 224.5g; 71.3) as a colourless mobile liquid (which fumes in moist air) b.pt. 36-40°C/21mm Hg. [cf 45.5-47°C/20mm Hg, Lucas *et al*, J. Am. Chem. Soc., 72, 5491, (1950)].
IR (cm⁻¹, thin film) 2980, 2905, 1470, 1210, 1005, 930, 813, 770.

### b) 2-Chloro-2-oxo-1,3,2-dioxaphospholane (2)

In a flask fitted with a magnetic stirrer, reflux condenser (fitted with a CaCl₂ guard tube) and sintered glass gas inlet tube, was placed a solution of 2-chloro-1,3,2-dioxaphospholane (100.8g; 0.797mol) in dry benzene (200ml). The solution was stirred and a steady stream of oxygen was bubbled through the solution. The reaction was mildly exothermic, and temperature control was achieved by allowing the solvent to reflux. The oxygen was passed through the reaction mixture for 6 hours. The solvent was removed by rotary evaporation, and the colourless mobile residue distilled to give 2-chloro-2-oxo-1,3,2-dioxaphospholane (2) (87.41g; 77%) as a colourless mobile liquid -b.pt 95-97°C/0.2mbar [c.f. 102.5-105°C/lmbar (Edmundson, Chem. Ind. (London)), 1828 (1962); 79°C/0.4mbar (Umeda *et al.,* Makromol. Chem. Rapid Commun., 3, 457, (1982)].

IR(cm⁻¹, thin film) 2990, 2910, 1475, 1370, 1310, 1220, 1030, 930, 865, 830.

### c) 2(2-Oxo-1,3,2-dioxaphospholan-2-yloxy)ethyl methacrylate (3)

In a flask fitted with a magnetic stirrer, low temperature thermometer, and a pressure equalising funnel fitted with a silica gel guard tube; was placed a solution of 2-hydroxyethylmethacrylate (20.00g, 0.154mol) and triethylamine (15.60g; 0.154mol) in dry diethyl ether (300ml). The solution was stirred and cooled to between -20°C and -30°C. A solution of freshly distilled 2-chloro-2-oxo-1,3,2-dioxaphospholane(2) (21.9g; 0.154 mol) in dry diethyl ether (20ml) was then added dropwise over 30 minutes, the temperature being held at -20°C during the addition. Stirring was continued at this temperature for a further 1 hour and then for a further hour as the reaction mixture was allowed to warm to room temperature. The precipitated triethylamine hydrochloride was removed by filtration, and was washed well with dry ether. The ether was removed from the combined filtrate and washings by rotary evaporation. The cloudy oil residue was then shaken for 5 minutes with dry diethyl ether (50ml) to precipitate a further crop of triethylamine hydrochloride, which was again removed by filtration. Removal of the ether on the rotary evaporator gave (3) (34.18g; 94.3%) as a colourless viscous oil. IR (cm⁻¹, thin film) 1720, 1640, 1450, 1360, 1310, 1290, 1170, 1030, 930, 850. NMR (CDCl₃; 60MHz, δ ppm) 1.95 (s,3H), 4.25-4.70 (m,8H), 5.70 (m,1H), 6.25 (m,1H). Rf 0.9 (SiO₂, eluting with 10% methanol:90% dichloromethane; spot visualised with molybdenum blue spray reagent and with iodine vapour).

### d) 2(Methacryloyloxyethyl)-2'(trimethylammonium)ethyl phosphate inner salt (4).

The phospholane (3) (67.20g; 0.285 mol) was dissolved in 100 ml of dry acetonitrile, and placed in a heavy walled tissue culture bottle. The phospholane solution was then treated with a solution of anhydrous trimethylamine (25.74g; 0.436 mol) in dry acetonitrile (100ml). The vessel was then sealed, and placed in a water bath held at 50°C for 30 hours. The vessel was opened, and the solution brought to the boil. The solution was filtered whilst hot, and then set aside for crystallisation.

The product was collected by filtration, and most of the solvent removed by suction. The wet product was then washed thoroughly with anhydrous ether, then dried under reduced pressure, to give (4) as a white amorphous, hygroscopic solid (51.16g; 61%). Evaporation of the mother liquor gave a very viscous oil (20.00g; 23%), from which further product (4) crystallised on standing at -20°C. TLC (silica gel plates, eluting with methanol/dichloromethane (1:1 v/v)) showed one spot Rf 0.1, which was revealed with Dragendorff's reagent, Molybdenum blue spray reagent, and iodine vapour. IR(cm⁻¹ 1720, 1640, 1320, 1300, 1230, 1170, 970, 750.

NMR (D₂O; 60MHz; δ ppm) 2.0 (s,3H), 3.27 (s,9H) 3.60-4.50 (m, 8H), 5.80, (m,1H) and 6.25 (m,1H).

| | | | | |
|---|---|---|---|---|
| CHN Found | C 42.98%, | H 7.88%, | N 4.42%, | P 10.51%. |
| CHN Theory | C 44.75%, | H 7.46%, | N 4.75%, | P 10.51%. |

### Reference Example 2:

### Synthesis of dimethyl(2-methacryloyloxyethyl)-(1(2-sulphopropyl)) ammonium betaine inner salt

2(Dimethylamino)ethylmethacrylate was vacuum distilled and then dissolved in 0.1M dichloromethane. To this solution was added an equimolar amount of propane sultone. The betaine slowly precipitated out of solution and was recovered by filtration and washed with cold dichloromethane. The reaction is shown in Reaction Scheme B.

### Reference Example 3

### Preparation of 1[4(4'-vinylbenzyloxy)butane)-2"-(trimethylammonium) ethyl phosphate inner salt

The synthesis is depicted in Reaction Scheme C.

### 4-Hydroxy-1(4'-vinylbenzyloxy)butane (5)

Butanediol (40ml; 40.68g; 0.452mol) was stirred in a 100ml round bottomed flask, and treated portion wise with potassium butoxide (17.60g; 0.144mol). The initial reaction was exothermic. The reaction mixture was stirred for 1.5 hours at room temperature. The resulting cloudy solution was then treated with chloromethyl styrene (20.00g; 0.131 mol). The styrene formed an upper, pale green layer, (the colouration being due to the presence of inhibitor), whose color darkened considerably on the addition of 18-crown-6 (0.49g; 1.86x10⁻³ mole). The flask was stoppered, protected from light, and stirred for 28 hours at room temperature. The mixture was then poured into water (120 ml) and extracted with dichloromethane (4x50ml). The combined organic extracts were dried (MgSO₄) and evaporated to give viscous yellow oil (932.7g). This oil was distilled from a small amount of CuCl to give a product showing some impurities on TLC. The oil was then chromatographed on silica gel, initially eluting with dichloromethane/petrol (1:1) to remove the impurities. The product was then eluted off the column with ethyl acetate/petrol (1:1). Evaporation of the solvent gave a colourless oil, which was distilled to give the desired styrylbutyl alcohol as a colourless oil b.pt. 150-152°/0.4mbar. Yield 18.70g 69.2%.
NMR (60MHz: CDCl₃) 1.55 (m, 4H, C-CH₂-C); 3.50 (m, 5H, 1H exch.; O-CH₂-, O-H), 4.45 (s,2H; Ar-CH₂-), 5.50 (dd, 2H, vinylic), 6.75 (dd, vinylic), 7.40 (m, 4H, Ar-H).
IR 3402, 2938, 2888, 1631, 1602, 1582, 1511, 1480, 1445, 1382, 1320, 1116, 1063, 920, 907, 827, 801, 716 and 667 cm⁻¹.

### 4(2-Oxo-1,2,3-dioxaphospholane-2-yloxyl-1(4'-vinylbenzyloxy)butane (6)

4-Hydroxy-1(4'-vinylbenzyloxy)butane (5) (10.03g; 48.69 mmol) and dried triethylamine (4.92g, 48.69 mmol) were dissolved in dry diethyl ether (150ml) and the resulting solution placed in a rigorously dried flask. The solution was cooled to -30°C and
2-chloro-2-oxo-1,3,2-dioxaphospholane (6.94g; 48.69 mmol) added dropwise over 30 minutes, the temperature being held at -30°C. The reaction mixture was then stirred for a further 2 hours, during which time the temperature was allowed to rise to 10°C. The mixture was filtered and the precipitate washed with dry ether. The filtrate was evaporated (20°C / 21mm Hg) to give a cloudy oil. The residue was shaken with 50ml of dry ether and refiltered. Evaporation of the filtrate gave the product as a viscous yellow oil (13.73 g; 90.4%).

TLC (eluting with 10% methanol/90% dichloromethane) showed one major spot, which stained with acid molybdate reagent (Rf 0.61), IR (thin film) 3458, 2945, 2917, 2860, 1630, 1607, 1581, 1475, 1419, 1363, 1283, 1103, 1032, 820, 842, 807, 800, 715, 610 and 421 cm⁻¹.

### 1[4(4'-vinylbenzyloxy)butane]-2"(trimethylammonium)ethyl phosphate inner salt (7)

Trimethylamine (2.00g, 33.9 mmol) was distilled into a reaction vessel, and frozen with liquid nitrogen. A solution of the 4(2-oxo-1,3,2-dioxaphospholane-2-yloxy]-1-(4'-vinylbenzyloxy)butane (6) (10.00g, 32.1 mmol) in anhydrous acetonitrile (40ml) was then added to the reaction vessel, which was then sealed and placed in a thermostatted water bath (50°C for 50 hours). The reaction vessel was then cooled to room temperature, opened, and the reaction mixture evaporated to about half its original volume (21 mm Hg pressure). The concentrated solution was then stirred at room temperature, whilst anhydrous ether (200ml) was added dropwise to precipitate the product as a viscous oil. The mixture was then left for several hours at -10°C. The product was collected by decanting off the supernatant solid. TLC (eluting with methanol/dichloromethane 1:1) showed one major spot at Rf 0.0-0.1 which stained with both Dragendorffs reagent and acid molybdate.

### Reference Example 4

### Preparation of 2(acryloyloxyethyl)-2'-(trimethylammonium) ethyl phosphate inner salt

The synthesis is essentially analogous to that described in Reference Example 1 and uses a synthetic strategy analogous to that shown in Reaction Scheme A.

### (a) 2-(2-Oxo-1,3,2-dioxaphospholan-2-yloxy)ethyl acrylate

2 -Hydroxyethyl acrylate (11.5ml, 0.1M) and triethylamine (14.6 ml) in dry diethyl ether (250ml) were cooled to -25°C under nitrogen and a solution of 2-chloro-2-oxo-1,3,2-dioxaphospholane (14.3g) in dry diethyl ether was added over 20 minutes. The mixture was stirred for a further 1 hour at -20°C and then allowed to warm to 10°C over a further hour. The precipitate was filtered, washed with ethyl acetate (100ml) and the combined filtrate and washings evaporated under reduced pressure to give a pale yellow oil (21g).

¹HNMR (200MHz) d (CD₃CN) 6.4 (1H,dd), 6.2 (1H,dd), 5.9 (1H,dd), 4.0-3.6 (8H,complex) ppm.

### (b) 2-(Acryloyloxyethyl)-2'-(trimethylammonium)ethyl phosphate inner salt.

2-(2-Oxo 1,3,2-dioxaphospholan-2-yloxy) ethyl acrylate (21g,0.095M) in acetonitrile (50ml) was treated with a solution of triethylamine (12.1g) in acetonitrile (150ml) in a pressure reactor at 50°C for 17 hours. The mixture was cooled and some of the excess triethylamine removed by evaporation under reduced pressure.

The solid material was filtered under nitrogen, washed with acetonitrile (20ml) and diethylether (50ml) and then dried under reduced pressure to give a colourless oil (12.1g, 45%).

¹H NMR (200MHz) d (D₂O) 6.45 (1H,dd, J 1.2 and 17.1 Hz), 6.25 (lH,dd,Jl.2 and 10.25Hz), 6.02 (lH,dd, J1.23 and 10.25Hz), 4.4 (2H,m), 4.3 (2H, m), 4.2 (2H,m) 3.6(2H,m) and 3.2(9H,s) ppm.

### Reference Example 5

### Preparation of poly(2(methacryloyloxyethyl)-2'(trimethylammonium)ethyl phosphate inner salt-co-n-dodecyl methacrylate (1:4)

2(Methacryloyloxyethyl)-2'(trimethylammonium)ethyl phosphate inner salt (10.00g, 0.0339 mole) and n-dodecyl methacrylate (35.56g, 0.1400 mole) were dissolved in propan-2-ol (200ml) and ethyl acetate (200ml). The solution was stirred (250rpm) at 23°C under a stream of nitrogen (50ml/min) for 30 minutes.
2,2'-azo-bis-(2-methylpropionitrile) (0.0886g, 0.54mmole) was added and the flow of nitrogen was reduced to 10ml/min, the reaction temperature was raised to 60°C. This temperature and nitrogen flow rate were maintained for 40 hours.

The mixture was allowed to cool and vacuum filtered. The filtrate was evaporated to dryness using a rotary evaporator and dissolved in dichloromethane (130ml). The polymer was isolated from this mixture by precipitation in acetone (2500 ml), vacuum filtration and drying.

The polymer was redissolved in dichloromethane (120ml) and methanol (10ml) and isolated as before.

The resulting polymer, obtained in 70-80% yield was a white solid.
NMR(200MHz, d, ppm, CD₃OD/CDCl₃) 4.2-4.4 (b), 3.8-4.2 (b), 3.6-3.8 (b), 3.3 (s), 1.8-2.2 (b), 1.5-1.8 (b), 1.2-1.5 (s), 0.8-1.0 (s)
IR (cm⁻¹, KBr disc) 3430, 2929, 2854, 1732, 1469, 1246, 1156, 1089, 968, 788.

| Elemental Anaylsis: | | | | |
|---|---|---|---|---|
| theory | C: 68.9, | H 10.5, | N 1.1, | P 2.4 |
| actual | C: 65.5, | H 10.8, | N 1.1, | P 2.4 |

The polymer had a relative viscosity in ethanol: chloroform (50:50) at 25°C of 1.26 ± 0.02.

Samples of polyethylene, steel and PVC were coated using the methods described in Examples 2 and 3. Using the enzyme immunoassay for protein adsorption, a greater than 80% reduction in protein adsorption on steel and greater than 70% reduction in protein adsorption on PVC were obtained.

In a further determination, a sample of stainless steel coated with the polymer showed a reduction of 80% in protein adsorption (determined by the enzyme immunoassay described above) and a reduction of 95% in platelet activation (determined by the platelet activation assay described above using anti-GMP 140), compound to untreated material. A sample of PVC coated with the polymer showed a reduction of 70% in protein adsorption and 100% in platelet activation compound to untreated material using the same assay techniques. 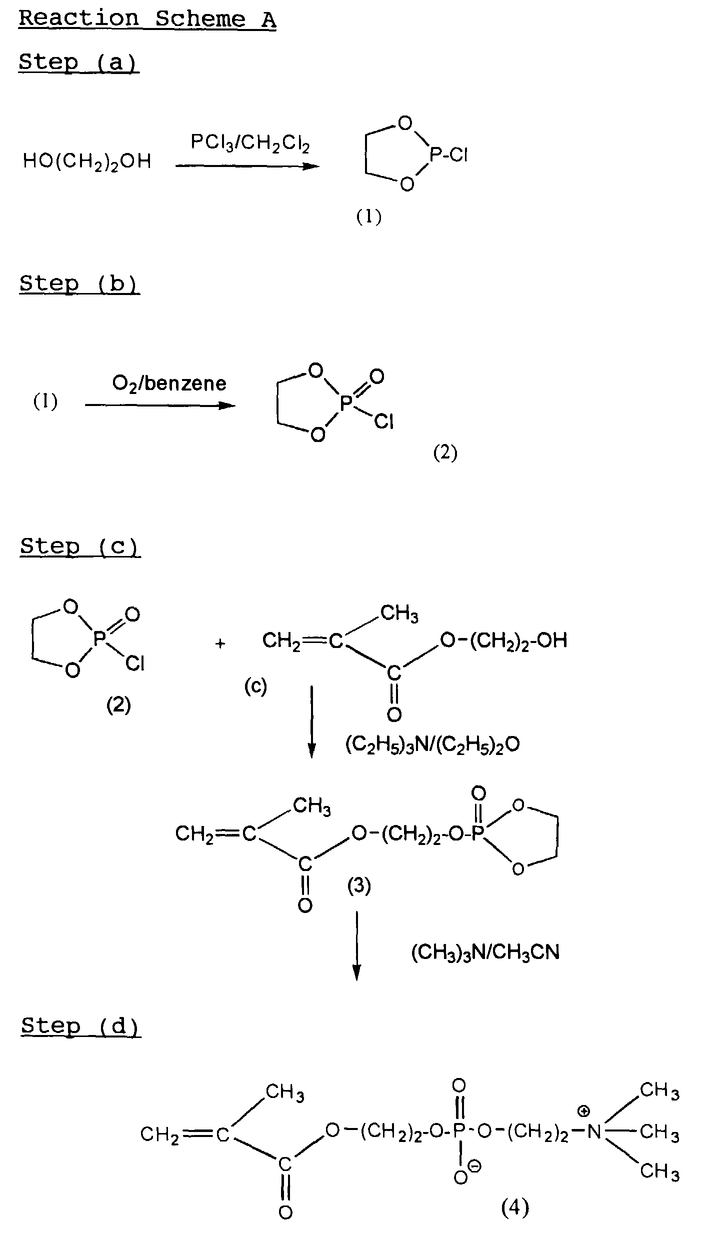 Steps (a) to (d) correspond with the steps in Reference Example 1.

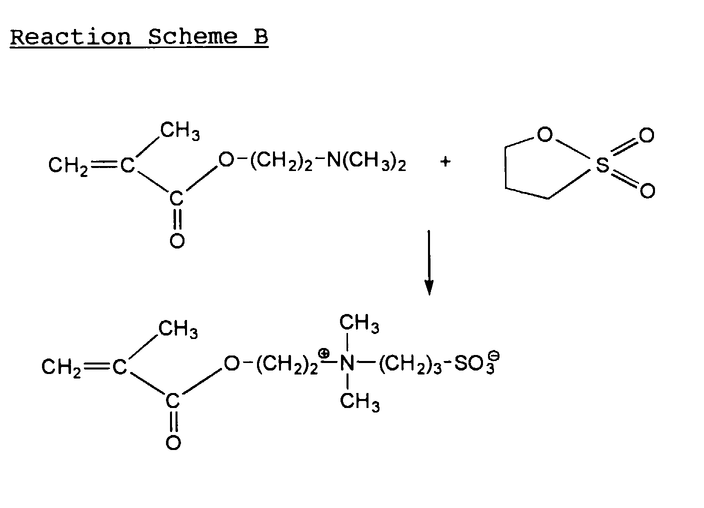

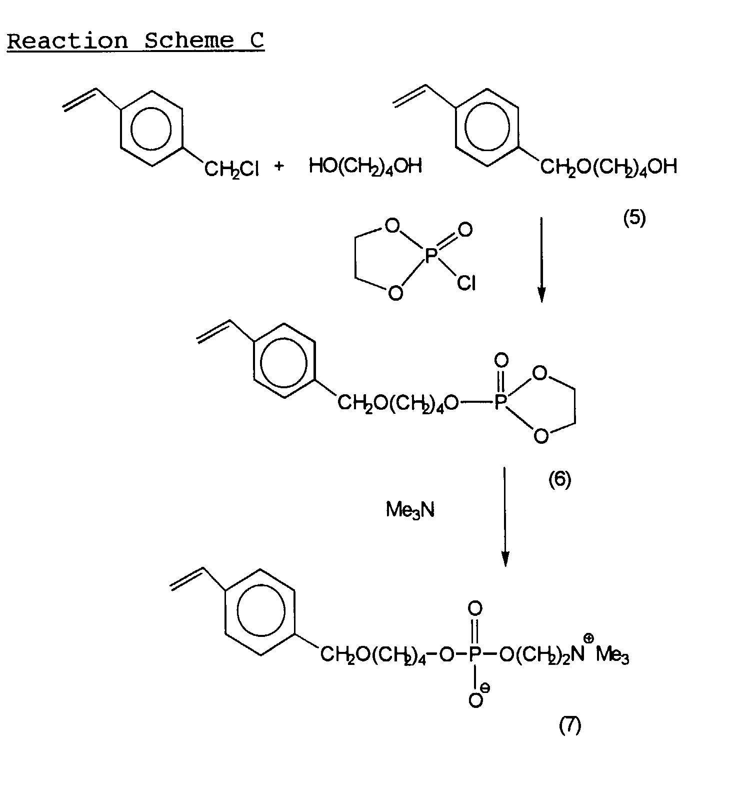

## Claims

1. A polymer obtainable by the polymerisation of radical polymerisable monomers containing:
a) a zwitterionic monomer having the general formula:
Y-B-X (I)
wherein
B is a straight or branched alkylene, oxaalkylene or oligo-oxaalkylene chain optionally containing one or more fluorine atoms up to and including perfluorinated chains, or if X contains a carbon-carbon chain between B and the centre of permanent positive charge or if Y contains a terminal carbon atom bonded to B, a valence bond;
X is a zwitterionic group and
Y is an ethylenically unsaturated polymerizable group selected from 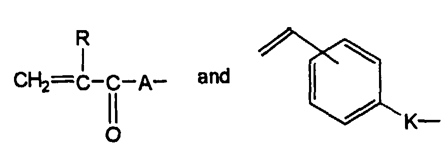 wherein:
R is hydrogen or a C₁-C₄ alkyl group;
A is -O- or -NR¹- where R¹ is hydrogen or a C₁-C₄ alkyl group or R¹ is -B-X where B and X are as defined above; and
K is selected from the group consisting of -(CH₂)ₚNR²C(O)-, -(CH₂)ₚC(O)O-, -(CH₂)ₚNR²-, -(CH₂)ₚC(O)NR²-, (CH₂)ₚNR²C(O)O-, -(CH₂)ₚOC(O)NR²-, -(CH₂)ₚNR²C(O)NR²-, (in which the groups R² are the same or different) -(CH₂)ₚO-, -(CH₂)ₚSO₃-, and, optionally in combination with B, a valence bond and p is from 1 to 12 and R² is hydrogen or a C₁-C₄ alkyl group and
b) an ionic comonomer having the general formula (XII)
Y²-B⁹-Q⁵ (XII)
where Y² is an ethylenically unsaturated polymerizable group selected from 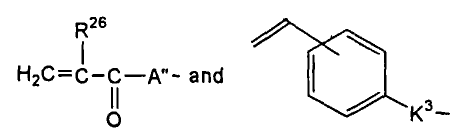 where
R²⁶ is hydrogen or C₁-C₄ alkyl;
A" is -O- or NR²⁷, wherein R²⁷ is hydrogen or a C₁-C₄ alkyl group or R²⁷ is a group -B⁹Q⁵;
B⁹ is a valence bond, a straight or branched alkylene oxaalkylene or oligo-oxaalkylene group;
K³ is a group -(CH₂)ₓOC(O)-, -(CH₂)ₓC(O)O-, -(CH₂)ₓNR²⁸-, -(CH₂)ₓNR²⁸C(O)-, -(CH₂)ₓC(O)NR²⁸-, -(CH₂)ₓNR²⁸C(O)O-, -(CH₂)ₓOC(O)NR²⁸-, -(CH₂)ₓNR²⁸C(O)NR²⁸- (in which the groups R²⁸ are the same or different), -(CH₂)ₓO-, -(CH₂)ₓSO₃-, a valence bond, x is from 1 to 12 and R²⁸ is hydrogen or a C₁-C₄ alkyl group; and
Q⁵ is an ionic group.

2. A polymer according to claim 1 in which the group Q⁵ is selected from the group consisting of carboxylate; sulphonate; hydrogen phosphate; phosphate; groups -NR³¹₃⁺ in which each group R³¹ is the same or different, and is hydrogen or alkyl of 1 to 6 carbon atoms two of which groups R³¹ may together form a heterocyclic ring containing from 5 to 7 atoms, groups N⁺Het, where Het is an unsaturated heterocyclic group unsubstituted or substituted by one or more alkyl groups of 1 to 4 carbon atoms; and groups -PR³²₃⁺ in which each group R³² is the same or different and is hydrogen or alkyl of 1 to 6 carbon atoms, two of which groups R³² may together form a heterocyclic ring containing 5 to 7 atoms.

3. A polymer according to claim 2 in which the group Q⁵ is selected from the group consisting of carboxylate, sulphonate, phosphate and groups -NR³¹₃⁺ in which each group R³¹ is the same or different and is hydrogen or methyl.

4. A polymer according to any preceding claim in which X is selected from groups IVB, IVC, IVD, IVE and IVF in which IVB has the formula: 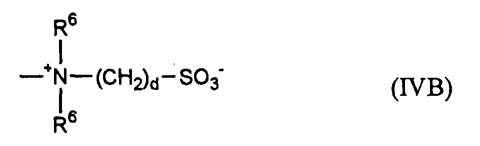 wherein the groups R⁶ are the same or different and each is hydrogen or C₁₋₄ alkyl and d is from 2 to 4;
group IVC has the formula 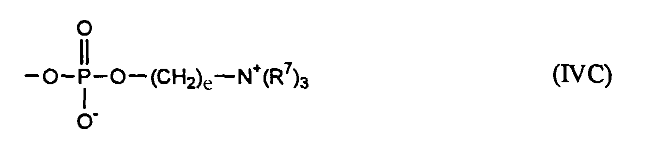 wherein the groups R⁷ are the same or different and each is hydrogen or C₁₋₄ alkyl, and e is from 1 to 4;
group IVD has the formula 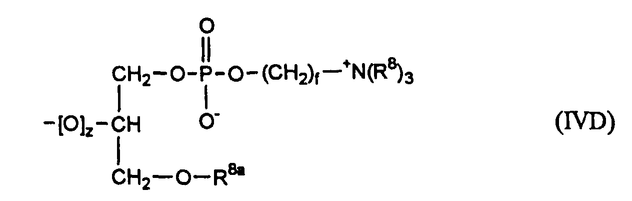 wherein the groups R⁸ are the same or different and each is hydrogen or C₁₋₄ alkyl, R^{8a} is hydrogen or a group-C(O)B¹R^{8b} wherein R^{8b} is hydrogen or methyl, B¹ is a valence bond or straight or branched alkylene, oxaalkylene or oligo-oxaalkylene group, and f is from 1 to 4; and if B is other than a valence bond z is 1 and if B is a valence bond z is 0, if X is directly bonded to an oxygen or nitrogen atom and otherwise z is 1;
group IVE has the formula 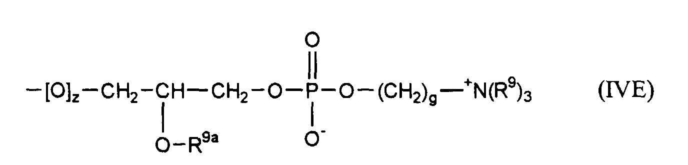 wherein the groups R⁹ are the same or different and each is hydrogen or C₁₋₄ alkyl, R^{9a} is hydrogen or a group-C(O)B²R^{9b}, wherein R^{9b} is hydrogen or methyl, B² is a valence bond or a straight or branched alkylene, oxaalkylene or oligo-oxaalkylene group, and g is from 1 to 4; and
if B is other than a valence bond, Z is 1 and if B is a valence bond z is 0 if X is directly bonded to an oxygen or nitrogen atom and otherwise z is 1; and
group IVF has the formula 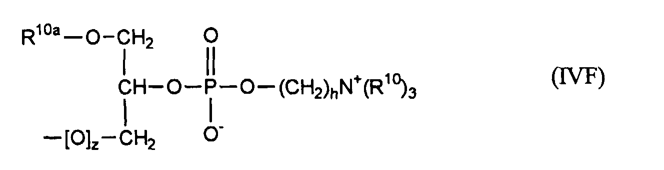 wherein the groups R¹⁰ are the same or different and each is hydrogen or C₁₋₄ alkyl, R^{10a} is hydrogen or a group-C(O)B³R^{10b} wherein R^{10b} is hydrogen or methyl, B³ is a valence bond or a straight or branched alkylene, oxaalkylene or oligo-oxaalkylene group, and h is from 1 to 4;
if B is other than a valence bond z is 1 and if B is a valence bond z is 0 if X is directly bonded to the oxygen or nitrogen and otherwise z is 1.

5. A polymer according to any preceding claim in which the molar ratio of zwitterionic monomer to ionic comonomer is in the range 5:95 to 95:5.

6. A polymer according to any preceding claim obtainable from monomers including 5 to 50% by mole of diluent monomer copolymerisable with the zwitterionic monomer and the ionic monomer.

7. A liquid composition which is a solution of a polymer according to any preceding claim in a solvent.

8. A coated product comprising a substrate having a surface, which surface carries a coating, wherein the coating comprises a polymer according to any of claims 1 to 6.

9. A method for biocompatibilising a surface in which a substrate having a surface with pendant ionic groups is contacted with a liquid coating composition according to claim 7 containing a copolymer in which the ionic groups Q⁵ have an opposite charge to the groups on the said surface, whereby the polymer becomes bound to the surface.

10. A method according to claim 9 in which the surface carries cationically charged groups and the copolymer contains anionic groups.

11. A method according to claim 9 in which the said surface carries anionically charged groups and the copolymer contains cationic groups.

12. A polymerisation process for producing a polymer according to claim 1 comprising the step of forming a polymer by radical polymerization of
a) a zwitterionic monomer having the general formula
Y-B-X (I)
wherein
B is a straight or branched alkylene, oxaalkylene or oligo-oxaalkylene chain optionally containing one or more fluorine atoms up to and including perfluorinated chains, or if X contains a carbon-carbon chain between B and the centre of permanent positive charge or if Y contains a terminal carbon atom bonded to B, a valence bond;
X is a zwitterionic group and
Y is an ethylenically unsaturated polymerizable group selected from 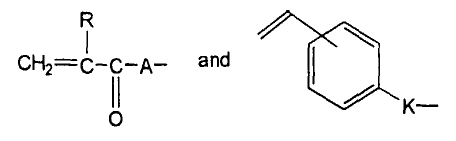 wherein:
R is hydrogen or a C₁-C₄ alkyl group;
A is -O- or -NR¹- where R¹ is hydrogen or a C₁-C₄ alkyl group or R¹ is -B-X where B and X are as defined above; and
K is selected from the group consisting of -(CH₂)ₚNR²C(O)-, -(CH₂)ₚC(O)O-, -(CH₂)ₚNR²-, (CH₂)ₚC(O)NR²-, -(CH₂)ₚNR²C(O)O-, -(CH₂)ₚOC(O)NR²-, -(CH₂)ₚNR²C(O)NR²-, (in which the groups R² are the same or different) -(CH₂)ₚO-, -(CH₂)ₚSO₃-, and, optionally in combination with B, a valence bond and p is from 1 to 12 and R² is hydrogen or a C₁-C₄ alkyl group and
b) an ionic comonomer having the general formula (XII)
Y²-B⁹-Q⁵ (XII)
where Y² is an ethylenically unsaturated polymerizable group selected from 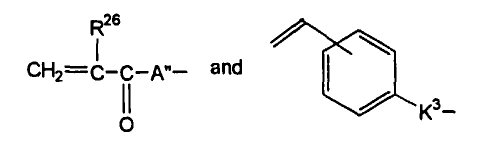 where
R²⁶ is hydrogen or C₁-C₄ alkyl;
A" is -O- or NR²⁷, wherein R²⁷ is hydrogen or a C₁-C₄ alkyl group or R²⁷ is a group -B⁹Q⁵;
B⁹ is a valence bond, a straight or branched alkylene oxaalkylene or oligo-oxaalkylene group;
K³ is a group -(CH₂)ₓOC(O)-, -(CH₂)ₓC(O)O- , -(CH₂)ₓNR²⁸-, -(CH₂)ₓNR²⁸C(O)-, -(CH₂)ₓC(O)NR²⁸-, -(CH₂)ₓNR²⁸C(O)O-, -(CH₂)ₓOC(O)NR²⁸-,-(CH₂)ₓNR²⁸C(O)NR²⁸- (in which the groups R²⁸ are the same or different) , -(CH₂)ₓO-, -(CH₂)ₓSO₃-, a valence bond, x is from 1 to 12 and R²⁸ is hydrogen or a C₁-C₄ alkyl group; and
Q⁵ is an ionic group.

13. A process according to claim 12 which comprises the features defined in any of claims 2 to 6.

## Patentansprüche

1. Polymer, erhältlich durch die Polymerisation von radikalisch polymerisierbaren Monomeren, welches enthält:
a) ein zwitterionisches Monomer der folgenden allgemeinen Formel:
Y-B-X (I)
worin
B eine geradkettige oder verzweigte Alkylen-, Oxaalkylen- oder Oligooxaalkylenkette bedeutet, die gegebenenfalls ein oder mehrere Fluoratome bis zu und einschließlich perfluorierter Ketten enthält, oder wenn X eine Kohlenstoff-Kohlenstoff-Kette zwischen B und dem Zentrum permanenter positiver Ladung enthält oder wenn Y ein an B gebundenes endständiges Kohlenstoffatom enthält, eine Valenzbindung;
X für eine zwitterionische Gruppe steht und
Y eine ethylenisch ungesättigte polymerisierbare Gruppe bedeutet, welche ausgewählt ist aus 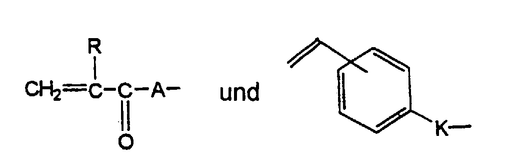 worin:
R Wasserstoff oder eine C₁-C₄-Alkylgruppe bedeutet;
A für -O- oder -NR¹- steht, worin R¹ Wasserstoff oder eine C₁-C₄-Alkylgruppe bedeutet oder R¹ -B-X bedeutet, worin B und X wie oben definiert sind; und
K ausgewählt ist aus der Gruppe bestehend aus -(CH₂)ₚNR²C(O)-, -(CH₂)ₚC(O)O-, -CH₂)ₚNR²-, -(CH₂)ₚC(O)NR²-, -(CH)ₚNR²C(O)O-, -(CH₂)ₚOC(O)NR²-, -(CH₂)ₚNR²C(O)NR²- (worin die Gruppen R² gleich oder verschieden sind), -(CH₂)ₚO-, -(CH₂)ₚSO₃- und, gegebenenfalls in Kombination mit B, einer Valenzbindung und p 1 bis 12 beträgt und R² Wasserstoff oder eine C₁-C₄-Alkylgruppe bedeutet; und
b) ein ionisches Comonomer der folgenden allgemeinen Formel (XII)
Y²-B⁹-Q⁵ (XII)
worin Y² eine ethylenisch ungesättigte polymerisierbare Gruppe bedeutet, welche ausgewählt ist aus 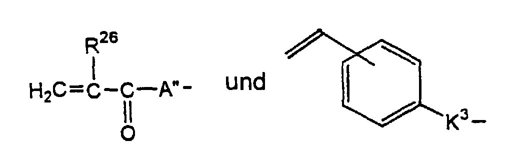 worin
R²⁶ Wasserstoff oder C₁-C₄-Alkyl bedeutet;
A" für -O- oder NR²⁷ steht, worin R²⁷ Wasserstoff oder eine C₁-C₄-Alkylgruppe bedeutet oder R²⁷ eine Gruppe -B⁹Q⁵ bedeutet;
B⁹ für eine Valenzbindung, eine geradkettige oder verzweigte Alkylen-, Oxaalkylen- oder Oligooxaalkylengruppe steht;
K³ eine Gruppe -(CH₂)ₓOC(O)-, -(CH₂)ₓC(O)O-, -(CH₂)ₓNR²⁸-, -(CH₂)ₓNR²⁸C(O)-, -(CH₂)ₓC(O)NR²⁸-, -(CH₂)ₓNR²⁸C(O)O-, -(CH₂)ₓOC(O)NR²⁸-, -(CH₂)ₓNR²⁸C(O)NR²⁸- (worin die Gruppen R²⁸ gleich oder verschieden sind), -(CH₂)ₓO-, -(CH₂)ₓSO₃-, eine Valenzbindung bedeutet, x 1 bis 12 beträgt und R²⁸ Wasserstoff oder eine C₁-C₄-Alkylgruppe bedeutet; und
Q⁵ für eine ionische Gruppe steht.

2. Polymer nach Anspruch 1, worin die Gruppe Q⁵ ausgewählt ist aus der Gruppe bestehend aus Carboxylat; Sulfonat; Hydrogenphosphat; Phosphat; Gruppen -NR³¹₃⁺, worin jede Gruppe R³¹gleich oder verschieden ist und für Wasserstoff oder Alkyl mit 1 bis 6 Kohlenstoffatomen steht, wobei zwei der Gruppen R³¹ gemeinsam einen heterocyclischen Ring bilden können, der 5 bis 7 Kohlenstoffatome enthält, Gruppen N⁺Het, worin Het für eine ungesättigte heterocyclische Gruppe steht, die unsubstituiert oder durch eine oder mehrere Alkylgruppen mit 1 bis 4 Kohlenstoffatomen substituiert ist; und Gruppen -PR³²₃⁺, worin jede Gruppe R³² gleich oder verschieden ist und Wasserstoff oder Alkyl mit 1 bis 6 Kohlenstoffatomen bedeutet, wobei zwei der Gruppen R³¹ gemeinsam einen heterocyclischen Ring bilden können, der 5 bis 7 Kohlenstoffatome enthält.

3. Polymer nach Anspruch 2, worin die Gruppe Q⁵ ausgewählt ist aus der Gruppe bestehend aus Carboxylat, Sulfonat, Phosphat und Gruppen -NR³¹₃⁺, worin jede Gruppe R³¹ gleich oder verschieden ist und Wasserstoff oder Methyl bedeutet.

4. Polymer nach irgendeinem vorhergehenden Anspruch, worin X ausgewählt ist aus Gruppen IVB, IVC, IVD, IVE und IVF, worin IVB die folgende Formel hat: 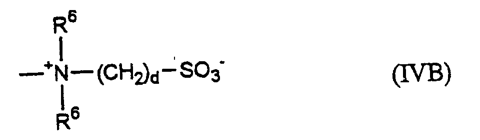 worin die Gruppen R⁶ gleich oder verschieden sind und jeweils für Wasserstoff oder C₁₋₄-Alkyl stehen und d 2 bis 4 beträgt;
Gruppe IVC die folgende Formel hat: 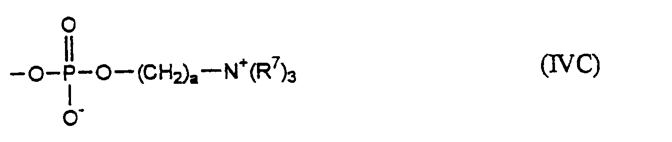 worin die Gruppen R⁷ gleich oder verschieden sind und jeweils für Wasserstoff oder C₁₋₄-Alkyl stehen und e 1 bis 4 beträgt;
Gruppe IVD die folgende Formel hat: 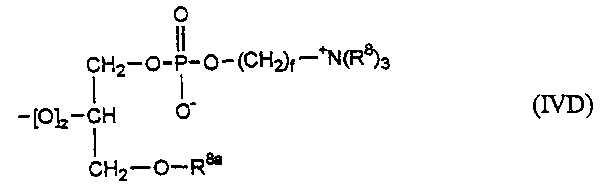 worin die Gruppen R⁸ gleich oder verschieden sind und jeweils für Wasserstoff oder C₁₋₄-Alkyl stehen, R^{8a} Wasserstoff oder eine Gruppe -C(O)B¹R^{8b} bedeutet,
worin R^{8b} für Wasserstoff oder Methyl steht, B¹ eine Valenzbindung oder eine geradkettige oder verzweigte Alkylen-, Oxaalkylen- oder Oligooxaalkylengruppe ist, und f 1 bis 4 beträgt; und wenn B von einer Valenzbindung verschieden ist, z 1 beträgt, und wenn B eine Valenzbindung ist, z 0 beträgt, wenn X direkt an ein Sauerstoff- oder Stickstoffatom gebunden ist, und ansonsten z 1 beträgt; Gruppe IVE die folgende Formel hat: 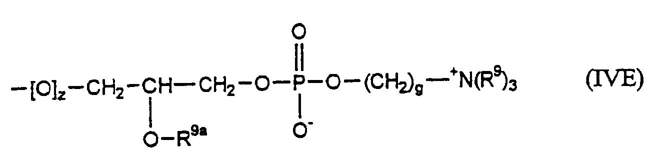 worin die Gruppen R⁹ gleich oder verschieden sind und jeweils für Wasserstoff oder C₁₋₄-Alkyl stehen, R^{9a} Wasserstoff oder eine Gruppe -C(O)B²R^{9b} bedeutet, worin R^{9b} für Wasserstoff oder Methyl steht, B² eine Valenzbindung oder eine geradkettige oder verzweigte Alkylen-, Oxaalkylen- oder Oligooxaalkylengruppe bedeutet, und g 1 bis 4 beträgt; und wenn B von einer Valenzbindung verschieden ist, z 1 beträgt, und wenn B eine Valenzbindung ist, z 0 beträgt, wenn X direkt an ein Sauerstoff- oder Stickstoffatom gebunden ist, und ansonsten z 1 beträgt; und
Gruppe IVF die folgende Formel hat: 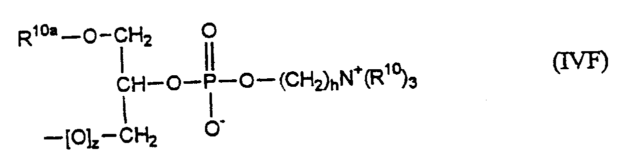 worin die Gruppen R¹⁰ gleich oder verschieden sind und jeweils für Wasserstoff oder C₁₋₄-Alkyl stehen, R^{10a} Wasserstoff oder eine Gruppe -C(O)B³R^{10b} bedeutet, worin R^{10b} für Wasserstoff oder Methyl steht, B³ eine Valenzbindung oder eine geradkettige oder verzweigte Alkylen-, Oxaalkylen- oder Oligooxaalkylengruppe bedeutet, und h 1 bis 4 beträgt; wenn B von einer Valenzbindung verschieden ist, z 1 beträgt, und wenn B eine Valenzbindung ist, z 0 beträgt, wenn X direkt an den Sauerstoff oder Stickstoff gebunden ist, und ansonsten z 1 beträgt.

5. Polymer nach irgendeinem vorhergehenden Anspruch, worin das Molverhältnis von zwitterionischem Monomer zu ionischem Comonomer im Bereich von 5:95 bis 95:5 liegt.

6. Polymer nach irgendeinem vorhergehenden Anspruch, erhältlich aus Monomeren, welche 5 bis 50 Mol-% Verdünnungs-Monomer enthalten, welches mit dem zwitterionischen Monomer und dem ionischen Monomer copolymerisierbar ist.

7. Flüssige Zusammensetzung, bei welcher es sich um eine Lösung eines Polymers gemäß irgendeinem vorhergehenden Anspruch in einem Lösungsmittel handelt.

8. Beschichtetes Produkt, umfassend ein Substrat mit einer Oberfläche, welche Oberfläche eine Beschichtung trägt, worin die Beschichtung ein Polymer gemäß irgendeinem der Ansprüche 1 bis 6 umfaßt.

9. Verfahren zur Biokompatibilisierung einer Oberfläche, worin ein Substrat, welches eine Oberfläche mit seitenständigen ionischen Gruppen aufweist, mit einer flüssigen Beschichtungszusammensetzung gemäß Anspruch 7 kontaktiert wird, welche ein Copolymer enthält, worin die ionischen Gruppen Q⁵ eine entgegengesetzte Ladung zu den Gruppen auf der Oberfläche aufweisen, wodurch das Polymer an die Oberfläche gebunden wird.

10. Verfahren nach Anspruch 9, worin die Oberfläche kationisch geladene Gruppen trägt und das Copolymer anionische Gruppen enthält.

11. Verfahren nach Anspruch 9, worin die Oberfläche anionisch geladene Gruppen trägt und das Copolymer kationische Gruppen enthält.

12. Polymerisationsverfahren zur Herstellung eines Polymers gemäß Anspruch 1, umfassend die Schritte des Bildens eines Polymers durch radikalische Polymerisation von
a) einem zwitterionischen Monomer der folgenden allgemeinen Formel
Y-B-X (I)
worin
B eine geradkettige oder verzweigte Alkylen-, Oxaalkylen- oder Oligooxaalkylenkette bedeutet, die gegebenenfalls ein oder mehrere Fluoratome bis zu und einschließlich perfluorierter Ketten enthält, oder wenn X eine Kohlenstoff-Kohlenstoff-Kette zwischen B und dem Zentrum permanenter positiver Ladung enthält oder wenn Y ein an B gebundenes endständiges Kohlenstoffatom enthält, eine Valenzbindung;
X für eine zwitterionische Gruppe steht und
Y eine ethylenisch ungesättigte polymerisierbare Gruppe bedeutet, welche ausgewählt ist aus 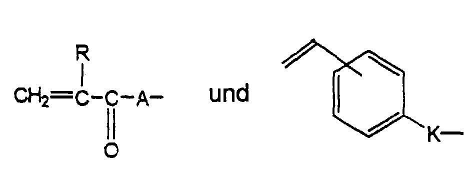 worin:
R Wasserstoff oder eine C₁-C₄-Alkylgruppe bedeutet;
A für -O- oder -NR¹- steht, worin R¹ Wasserstoff oder eine C₁-C₄-Alkylgruppe bedeutet oder R¹ -B-X bedeutet, worin B und X wie oben definiert sind; und
K ausgewählt ist aus der Gruppe bestehend aus -(CH₂)ₚNR²C(O)-, -(CH₂)ₚC(O)O-, -(CH₂)ₚNR²-, -(CH₂)ₚC(O)NR²-, -(CH₂)ₚNR²C(O)O-, -(CH₂)ₚOC(O)NR²-, -(CH₂)ₚNR²C(O)NR²- (worin die Gruppen R² gleich oder verschieden sind), -(CH₂)ₚO-, -(CH₂)ₚSO₃- und, gegebenenfalls in Kombination mit B, einer Valenzbindung und p 1 bis 12 beträgt und R² Wasserstoff oder eine C₁-C₄-Alkylgruppe bedeutet, und
b) einem ionischen Comonomer der folgenden allgemeinen Formel (XII)
Y²-B⁹-Q⁵ (XII)
worin Y² eine ethylenisch ungesättigte polymerisierbare Gruppe bedeutet, welche ausgewählt ist aus 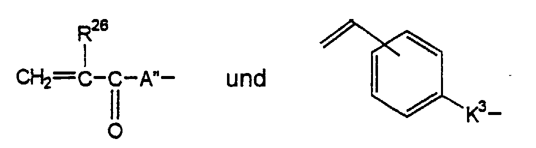 worin
R²⁶ Wasserstoff oder C₁-C₄-Alkyl bedeutet;
A" für -O- oder NR²⁷ steht, worin R²⁷ Wasserstoff oder eine C₁-C₄-Alkylgruppe bedeutet oder R²⁷ eine Gruppe -B⁹Q⁵ bedeutet;
B⁹ für eine Valenzbindung, eine geradkettige oder verzweigte Alkylen-, Oxaalkylen- oder Oligooxaalkylengruppe steht;
K³ eine Gruppe -(CH₂)ₓOC(O)-, -(CH₂)ₓC(O)O-, -(CH₂)ₓOC(O)-, -(CH₂)ₓNR²⁸-, -(CH₂)ₓNR²⁸C(O)-, -(CH₂)ₓC(O)NR²⁸-, -(CH₂)ₓNR²⁸C(O)O-, -(CH₂)ₓOC(O)NR²⁸-, -(CH₂)ₓNR²⁸C(O)NR²⁸- (worin die Gruppen R²⁸ gleich oder verschieden sind), -(CH₂)ₓO-, -(CH)_{X}SO₃-, eine Valenzbindung bedeutet, x 1 bis 12 beträgt und R²⁸ Wasserstoff oder eine C₁-C₄-Alkylgruppe bedeutet; und
Q⁵ für eine ionische Gruppe steht.

13. Verfahren nach Anspruch 12, welches die in irgendeinem der Ansprüche 2 bis 6 definierten Merkmale umfaßt.

## Revendications

1. Polymère que l'on peut obtenir par polymérisation de monomères polymérisables par une polymérisation radicalaire contenant:
a) un monomère zwittérionique ayant la formule générale:
Y-B-X (I)
dans laquelle
B est une chaîne alkylène, oxaalkylène ou oligooxaalkylène droite ou ramifiée, contenant éventuellement un ou plusieurs atomes de fluor allant y compris jusqu'aux chaînes perfluorées, ou une liaison de valence, si X contient une chaîne carbone-carbone entre B et le centre de la charge positive permanente ou si Y contient un atome de carbone terminal lié à B;
X est un groupe zwittérionique et
Y est un groupe polymérisable éthyléniquement insaturé choisi parmi 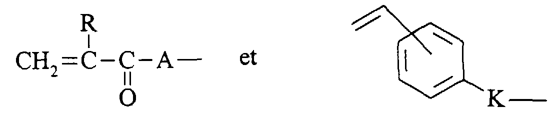 dans lesquels :
R est hydrogène ou un groupe alkyle en C₁-C₄;
A est -O- ou -NR¹- dans lequel R¹ est hydrogène ou un groupe alkyle en C₁-C₄ ou R¹ est -B-X, dans lequel B et X sont tels que définis ci-dessus; et
K est choisi dans le groupe constitué de -(CH₂)ₚNR²C(O)-, -(CH₂)ₚC(O)O-, -(CH₂)ₚNR²-, -(CH₂)ₚC(O)NR²-, -(CH₂)ₚNR²C(O)O-, -(CH₂)ₚOC(O)NR²-, -(CH₂)ₚNR²C(O)NR²- (dans lesquels les groupes R² sont identiques ou différents), -(CH₂)ₚO-, -(CH₂)ₚSO₃-, et, éventuellement en combinaison avec B, une liaison de valence et p est compris entre 1 et 12 et R² est hydrogène ou un groupe alkyle en C₁-C₄ et
b) un comonomère ionique ayant la formule générale (XII)
Y²-B⁹-Q⁵ (XII)
dans laquelle Y² est un groupe polymérisable éthyléniquement insaturé choisi parmi 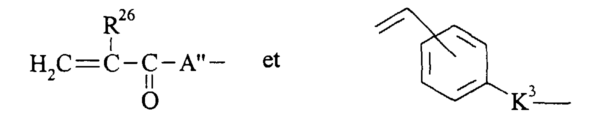 dans lesquels
R²⁶ est hydrogène ou alkyle en C₁-C₄;
A" est -O- ou NR²⁷, dans lequel R²⁷ est hydrogène ou un groupe alkyle en C₁-C₄ ou R²⁷ est un groupe -B⁹Q⁵;
B⁹ est une liaison de valence, un groupe alkylène, oxaalkylène ou oligooxaalkylène droit ou ramifié;
K³ est un groupe -(CH₂)ₓOC(O)-, -(CH₂)ₓC(O)O-,-(CH₂)ₓNR²⁸-, -(CH₂)ₓNR²⁸C(O)-, -(CH₂)ₓC(O)NR²⁸-, -(CH₂)ₓNR²⁸C(O)O-, -(CH₂)ₓOC(O)NR²⁸-, -(CH₂)ₓNR²⁸C(O)NR²⁸- (dans lesquels les groupes R²⁸ sont identiques ou différents), -(CH₂)ₓO-, -(CH₂)ₓSO₃-, une liaison de valence, x est compris entre 1 et 12 et R²⁸ est hydrogène ou un groupe alkyle en C₁-C₄ et
Q⁵ est un groupe ionique.

2. Polymère selon la revendication 1, dans lequel le groupe Q⁵ est choisi dans le groupe constitué de carboxylate; sulfonate; hydrogénophosphate; phosphate; des groupes -NR³¹₃⁺, dans lesquels tous les groupes R³¹ sont identiques ou différents, et chaque R³¹ est hydrogène ou alkyle ayant de 1 à 6 atomes de carbone, deux des groupes R³¹ pouvant former ensemble un noyau hétérocyclique contenant de 5 à 7 atomes, des groupes N⁺Het, dans lesquels Het est un groupe hétérocyclique insaturé non substitué ou substitué par un ou plusieurs groupes alkyle ayant de 1 à 4 atomes de carbone; et des groupes -PR³²₃⁺, dans lesquels tous les groupes R³² sont identiques ou différents, et chaque R³² est hydrogène ou alkyle ayant de 1 à 6 atomes de carbone, deux des groupes R³² pouvant former ensemble un noyau hétérocyclique contenant de 5 à 7 atomes.

3. Polymère selon la revendication 2, dans lequel le groupe Q⁵ est choisi dans le groupe constitué de carboxylate, sulfonate, phosphate et des groupes -NR³¹₃⁺, dans lesquels tous les groupes R³¹ sont identiques ou différents et chaque R³¹ est hydrogène ou méthyle.

4. Polymère selon l'une quelconque des revendications précédentes, dans lequel X est choisi parmi les groupes IVB, IVC, IVD, IVE et IVF, dans lequel le groupe IVB possède la formule: 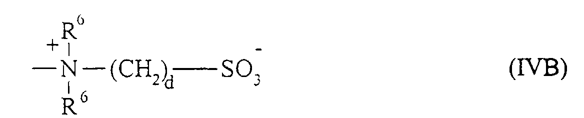 dans laquelle les groupes R⁶ sont identiques ou différents et chacun est hydrogène ou alkyle en C₁₋₄ et d est compris entre 2 et 4;
le groupe IVC possède la formule 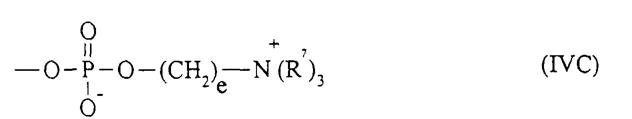 dans laquelle les groupes R⁷ sont identiques ou différents et chacun est hydrogène ou alkyle en C₁₋₄ et e est compris entre 1 et 4;
le groupe IVD possède la formule 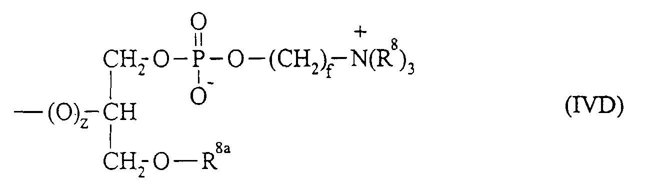 dans laquelle les groupes R⁸ sont identiques ou différents et chacun est hydrogène ou alkyle en C₁₋₄, R^{8a} est hydrogène ou un groupe -C(O)B¹R^{8b} dans lequel R^{8b} est hydrogène ou méthyle, B¹ est une liaison de valence ou un groupe alkylène, oxaalkylène ou oligooxaalkylène droit ou ramifié et f est compris entre 1 et 4; et si B est différent d'une liaison de valence, z est égal à 1 et si B est une liaison de valence, z est égal à 0, si X est directement lié à un atome d'oxygène ou d'azote et dans les autres cas z est égal à 1;
le groupe IVE possède la formule 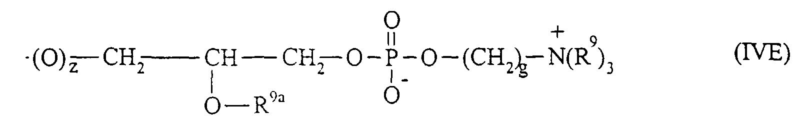 dans laquelle les groupes R⁹ sont identiques ou différents et chacun est hydrogène ou alkyle en C₁₋₄, R^{9a} est hydrogène ou un groupe -C(O)B²R^{9b}, dans lequel R^{9b} est hydrogène ou méthyle, B² est une liaison de valence ou un groupe alkylène, oxaalkylène ou oligooxaalkylène droit ou ramifié et g est compris entre 1 et 4; et
si B est différent d'une liaison de valence, z est égal à 1 et si B est une liaison de valence, z est égal à 0, si X est directement lié à un atome d'oxygène ou d'azote et dans les autres cas z est égal à 1; et
le groupe IVF possède la formule 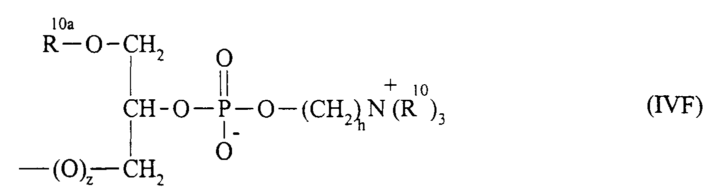 dans laquelle les groupes R¹⁰ sont identiques ou différents et chacun est hydrogène ou alkyle en C₁₋₄, R^{10a} est hydrogène ou un groupe -C(O)B³R^{10b} dans lequel R^{10b} est hydrogène ou méthyle, B³ est une liaison de valence ou un groupe alkylène, oxaalkylène ou oligooxaalkylène droit ou ramifié et h est compris entre 1 et 4; et
si B est différent d'une liaison de valence, z est égal à 1 et si B est une liaison de valence, z est égal à 0, si X est directement lié à un atome d'oxygène ou d'azote et dans les autres cas z est égal à 1.

5. Polymère selon l'une quelconque des revendications précédentes, dans lequel le rapport molaire entre le monomère zwittérionique et le comonomère ionique est dans la gamme comprise entre 5:95 et 95:5.

6. Polymère selon l'une quelconque des revendications précédentes, que l'on peut obtenir à partir de monomères comprenant de 5 à 50% en moles d'un monomère diluant copolymérisable avec le monomère zwittérionique et le monomère ionique.

7. Composition liquide qui est une solution d'un polymère selon l'une quelconque des revendications précédentes dans un solvant.

8. Produit revêtu comprenant un substrat comportant une surface, cette surface portant un revêtement, dans lequel le revêtement comprend un polymère selon l'une quelconque des revendications 1 à 6.

9. Procédé pour rendre biocompatible une surface, dans lequel on met en contact un substrat, comportant une surface avec des groupes pendants ioniques, avec une composition de revêtement liquide selon la revendication 7 contenant un copolymère, dans lequel les groupes ioniques Q⁵ possèdent une charge opposée aux groupes sur ladite surface, grâce à quoi le polymère se retrouve lié à la surface.

10. Procédé selon la revendication 9, dans lequel la surface porte des groupes chargés positivement et le copolymère contient des groupes anioniques.

11. Procédé selon la revendication 9, dans lequel ladite surface porte des groupes chargés négativement et le copolymère contient des groupes cationiques.

12. Procédé de polymérisation pour la production d'un polymère selon la revendication 1 qui comprend l'étape de formation d'un polymère par polymérisation radicalaire de:
a) un monomère zwittérionique ayant la formule générale:
Y-B-X (I)
dans laquelle
B est une chaîne alkylène, oxaalkylène ou oligooxaalkylène droite ou ramifiée, contenant éventuellement un ou plusieurs atomes de fluor allant y compris jusqu'aux chaînes perfluorées, ou une liaison de valence, si X contient une chaîne carbone-carbone entre B et le centre de la charge positive permanente ou si Y contient un atome de carbone terminal lié à B;
X est un groupe zwittérionique et
Y est un groupe polymérisable éthyléniquement insaturé choisi parmi 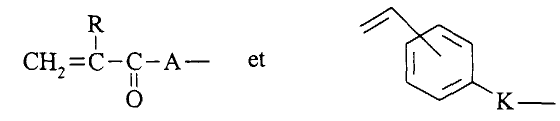 dans lesquels :
R est hydrogène ou un groupe alkyle en C₁-C₄;
A est -O- ou -NR¹- dans lequel R¹ est hydrogène ou un groupe alkyle en C₁-C₄ ou R¹ est -B-X, dans lequel B et X sont tels que définis ci-dessus; et
K est choisi dans le groupe constitué de -(CH₂)ₚNR²C(O)-, -(CH₂)ₚC(O)O-, -(CH₂)ₚNR²-, -(CH₂)ₚC(O)NR²-, -(CH₂)ₚNR²C(O)O-, -(CH₂)ₚOC(O)NR²-, -(CH₂)ₚNR²C(O)NR²- (dans lesquels les groupes R² sont identiques ou différents), -(CH₂)ₚO-, -(CH₂)ₚSO₃-, et, éventuellement en combinaison avec B, une liaison de valence et p est compris entre 1 et 12 et R² est hydrogène ou un groupe alkyle en C₁-C₄ et
b) un comonomère ionique ayant la formule générale (XII)
Y²-B⁹-Q⁵ (XII)
dans laquelle Y² est un groupe polymérisable éthyléniquement insaturé choisi parmi 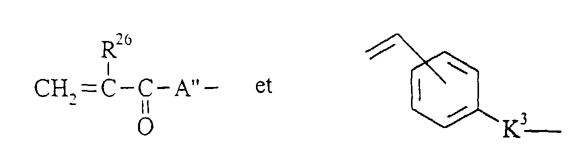 dans lesquels
R²⁶ est hydrogène ou alkyle en C₁-C₄;
A" est -O- ou NR²⁷, dans lequel R²⁷ est hydrogène ou un groupe alkyle en C₁-C₄ ou R²⁷ est un groupe -B⁹Q⁵;
B⁹ est une liaison de valence, un groupe alkylène, oxaalkylène ou oligooxaalkylène droit ou ramifié;
K³ est un groupe -(CH₂)ₓOC(O)-, -(CH₂)ₓC(O)O-, -(CH₂)ₓNR²⁸-, -(CH₂)ₓNR²⁸C(O)-, -(CH₂)C(O)NR²⁸-, -(CH₂)ₓNR²⁸C(O)O-, -(CH₂)ₓOC(O)NR²⁸-, -(CH₂)ₓNR²⁸C(O)NR²⁸- (dans lesquels les groupes R²⁸ sont identiques ou différents), -(CH₂)ₓO-, -(CH₂)ₓSO₃-, une liaison de valence, x est compris entre 1 et 12 et R²⁸ est hydrogène ou un groupe alkyle en C₁-C₄ et
Q⁵ est un groupe ionique.

13. Procédé selon la revendication 12, qui comprend les caractéristiques définies dans l'une quelconque des revendications 2 à 6.
